# EUROPEAN PATENT APPLICATION

(11) **EP 4 742 031 A1**
(43) Date of publication of application: **13.05.2026**
(21) Application number: 24890276.9
(22) Date of filing: 30.08.2024
(51) Int. Cl.: G06F 9/451

(54) **IMAGE DISPLAY METHOD, IMAGE GENERATION METHOD, AND ELECTRONIC DEVICE**

(30) Priority: 15.11.2023 CN 202311523564
(71) Applicant: Huawei Technologies Co., Ltd., Shenzhen, Guangdong 518129 (CN)
(72) Inventor: WANG, Guohua, Shenzhen, Guangdong 518129 (CN)
(74) Representative: Pfenning, Meinig & Partner mbB
(86) International application number: PCT/CN2024/116021
(87) International publication number: WO 2025/102916

(57) **Abstract**

This application relates to the terminal field, and provides an image display method, an image generation method, and an electronic device, to resolve a problem that a wallpaper is weakly associated with a user and diversity of the wallpaper is low. A specific solution is as follows: When a user starts a first application, for example, a desktop application, a lock screen application, a screen-off application, or a system application, a target image related to multimedia content browsed by the user in another application may be displayed, and target text related to usage data generated when the user browses the multimedia content in the another application may be displayed. The target image and the target text that are related to the multimedia content browsed by the user are displayed in an interface of the lock screen application, the desktop application, the screen-off application, the system application, or the like, to improve association between displayed content and the user. In addition, a plurality of target images and a plurality of pieces of target text may be generated based on a diverse browsing history of the user, to improve diversity of displayed content.

## Description

This application claims priority to Chinese Patent Application No. 202311523564.9, filed with the China National Intellectual Property Administration on November 15, 2023 and entitled "IMAGE DISPLAY METHOD, IMAGE GENERATION METHOD, AND ELECTRONIC DEVICE", which is incorporated herein by reference in its entirety.

### TECHNICAL FIELD

Embodiments of this application relate to the terminal field, and in particular, to an image display method, an image generation method, and an electronic device.

### BACKGROUND

In the conventional technology, on a terminal, for example, a mobile phone or a tablet computer, a wallpaper of a lock screen interface of the terminal is usually an image selected by a user, or an image randomly selected by the terminal from a preset wallpaper image library.

With regard to the method for using the image selected by the user as the lock screen wallpaper, because the lock screen wallpaper does not change after being selected by the user, diversity of the lock screen wallpaper is insufficient. With regard to the method for using the image randomly selected by the terminal from the preset wallpaper image library as the lock screen wallpaper, although this method can enable the lock screen wallpaper to continuously change to meet a diversity requirement, images serving as the lock screen wallpaper are usually weakly associated with the user, affecting use experience of the user.

It can be learned that, in the methods in the conventional technology, the terminal cannot provide a wallpaper that is highly associated with the user and that meets a diversity requirement.

### SUMMARY

Embodiments of this application provide an image display method, an image generation method, and an electronic device, to resolve a problem in the conventional technology that a wallpaper is weakly associated with a user and diversity of the wallpaper is low.

According to a first aspect of embodiments of this application, this application provides an image display method, applied to a terminal, and including: receiving a first operation of starting a first application by a user; and displaying a target image and target text in response to the first operation. The target image is related to at least first data. The first data indicates multimedia content browsed by the user by using a second application. The first data includes at least one of the following data: metadata of the multimedia content, and media data of the multimedia content. The media data includes at least one of the following data of the multimedia content: text, audio, a video, and an image. The target text is related to at least second data. The second data indicates usage data generated when the user browses the multimedia content by using the second application.

In the technical solution provided in the first aspect, when the user starts the first application, for example, a desktop application, a lock screen application, a screen-off application, or a system application, a target image related to multimedia content browsed by the user in another application may be displayed, and target text related to usage data generated when the user browses the multimedia content in the another application may be displayed. In this way, the target image and the target text that are related to the multimedia content browsed by the user can be displayed in an interface of the lock screen application, the desktop application, the screen-off application, the system application, or the like. That is, both the target image and the target text are related to the user. If the user has historically browsed a large amount of multimedia content, corresponding target images and target text may be respectively generated based on a plurality of pieces of multimedia content browsed by the user, to improve diversity of a lock screen interface, a desktop interface, a screen-off interface, or the like. Such target images and target text help avoid monotony of an image generated based on a template, to improve use experience of the user. In addition, a lock screen wallpaper, a desktop wallpaper, and a widget in the screen-off interface may actually serve as a traffic entry to divert traffic to an application on the terminal. Such target images and target text can also provide a good opportunity for traffic display.

In a possible implementation, the target image is further related to a target display style, and/or the target text is further related to the target display style.

In a possible implementation, the target display style is a display style selected by the user from a plurality of displayed alternative display styles; or the target display style is a display style, among preset display styles, that is determined based on the multimedia content browsed by the user and that best matches the user.

In a possible implementation, the method further includes: displaying a second control; receiving a fourth operation of the user on the second control; and in response to the fourth operation, displaying, in the second application, multimedia content corresponding to the target image.

To be specific, after the target image and the target text are displayed, a jump control may be further displayed. After the user performs the fourth operation on the jump control, jumping to a corresponding multimedia application may be performed, and the multimedia content corresponding to the target image is displayed. This achieves good traffic diversion effect, to increase access of the user to the multimedia application.

In a possible implementation, the method further includes: sending the target display style to a server.

In a possible implementation, before displaying the target image and the target text, the method further includes: receiving the target image and the target text from the server.

To be specific, the terminal may send the target display style to the server, and the server provides the target image and the target text after receiving the target display style.

In a possible implementation, the method further includes: displaying a first control; receiving a second operation of the user on the first control; and sending first information to the server in response to the second operation, where the first information indicates the server to delete the target image and the target text from an image library corresponding to the user, and the image library stores a plurality of images and a plurality of pieces of text that are generated based on the multimedia content browsed by the user and the usage data generated when the user browses the multimedia content.

To be specific, when the target image and the target text are provided by the server, the server further stores the image library corresponding to the user, and the image library stores a plurality of target images and a plurality of pieces of target text that are generated according to the foregoing method. After displaying the target image and the target text, the terminal may further display a delete control. After the user performs the second operation on the delete control, the terminal may send deletion information to the server, where the deletion information indicates the server to delete the displayed target image and target text from the image library corresponding to the user. In this way, through interaction between the user and the terminal, content that the user is not interested in is no longer pushed to the user, to improve use experience of the user.

In a possible implementation, the method further includes: obtaining first data and second data; and generating the target image and the target text through a target model by using the first data, the second data, and the target display style as inputs, where the target model has a function of generating a corresponding image and corresponding text based on input multimedia content that is browsed by the user and an input display style.

To be specific, the terminal may generate the target image and the target text through the target model by using the first data, the second data, and the target display style as the inputs. In this way, the target image and the target text are generated through the target model, so that diversity of the target image and the target text can be improved, to improve use experience of the user. The target model is a model that may generate a corresponding image and corresponding text based on input multimedia content that is browsed by the user and an input display style. In this way, a target image and/or target text that comply/complies with the target display style can be generated according to a user requirement, so that a pushed target image and pushed target text better match the user, to improve use experience of the user.

In a possible implementation, the target model includes an image generation model and a text generation model; and generating the target image and the target text through the target model by using the first data, the second data, and the target display style as the inputs includes: generating the target image through the image generation model by using the first data and the target display style as inputs; and generating the target text through the text generation model by using the second data as an input. This can achieve better effect of generation, so that the generated target image and target text better meet a requirement.

In a possible implementation, when the first data includes at least the metadata, the method further includes: obtaining a feature vector of the first data; and generating a first descriptor based on the metadata and the target display style, and generating a second descriptor based on the second data, where the first descriptor describes a feature of an image that needs to be generated, and the second descriptor describes a feature of text that needs to be generated. Generating the target image through the image generation model by using the first data and the target display style as the inputs includes: generating the target image through the image generation model by using the feature vector of the first data and the first descriptor as inputs. Generating the target text through the text generation model by using the second data as the input includes: generating the target text through the text generation model by using the second descriptor as an input. In this way, the target model can determine the features of the image and the text that need to be generated, to output a target image and target text that better meet a requirement.

In a possible implementation, the second descriptor may alternatively be generated based on the second data and the metadata, or the second descriptor is generated based on the second data, the metadata, and the media data. In this way, the target text generated based on the second descriptor may include more content, to further improve interpretability of the target image and improve use experience of the user.

In a possible implementation, the method further includes: displaying a first control; receiving a second operation of the user on the first control; and in response to the second operation, deleting the target image and the target text from an image library corresponding to the user, where the image library stores a plurality of images and a plurality of pieces of text that are generated based on the multimedia content browsed by the user and the usage data generated when the user browses the multimedia content.

To be specific, when the target image and the target text are provided by the terminal, the terminal further stores the image library corresponding to the user, and the image library stores a plurality of target images and a plurality of pieces of target text that are generated according to the foregoing method. After displaying the target image and the target text, the terminal may further display a delete control. After the user performs the second operation on the delete control, the terminal may delete the displayed target image and target text from the image library. In this way, content that the user is not interested in may no longer be pushed to the user, to improve use experience of the user.

In a possible implementation, the first application is a lock screen application, and displaying the target image and the target text includes: displaying the target image in a lock screen interface; and receiving a third operation of the user in the lock screen interface, and displaying the target text.

To be specific, the first application started by the user may be the lock screen application. A specific manner of displaying the target image and the target text may be: displaying the target image in the lock screen interface; and when the third operation (for example, swipe-up) of the user is received, displaying the target text. In this way, the target text does not block a subject in the target image, to improve use experience of the user.

In a possible implementation, displaying the target image and the target text includes: When the first application is a desktop application, displaying the target image and the target text on a desktop as a desktop wallpaper; or when the first application is a screen-off application, displaying the target image and the target text are displayed in a screen-off interface as widgets; or when the first application is a system application, displaying the target image and the target text in a startup interface of the first application as a startup image.

To be specific, the first application started by the user may be the desktop application; in this case, the target image and the target text may be displayed as the desktop wallpaper. Alternatively, the first application started by the user may be the screen-off application; in this case, the target image and the target text may be displayed in the screen-off interface as the widgets. The first application started by the user may be the system application; in this case, the target image and the target text may be displayed in the startup interface of the system application as the startup image. The method in embodiments of this application may be applied to a plurality of scenarios, to improve association between an image displayed in each scenario and a user, and improve diversity of displayed content, to improve use experience of the user.

According to a second aspect of embodiments of this application, this application further provides an image generation method, applied to a server, and including: obtaining first data and second data of a terminal, where the first data indicates multimedia content browsed by a user corresponding to the terminal by using a second application; the first data includes at least one of the following data: metadata of the multimedia content, and media data of the multimedia content; the media data includes at least one of the following data of the multimedia content: text, audio, a video, and an image; and the second data indicates usage data generated when the user browses the multimedia content by using the second application; generating a target image and target text based on the first data and the second data, where the target image is related to at least the first data, and the target text is related to at least the second data; and sending the target image and the target text to the terminal.

To be specific, the server may generate, based on browsing of the multimedia content by the user on the terminal, the target image and the target text that are related to the multimedia content browsed by the user; and send the generated target image and target text to the terminal. In this way, the server can provide the terminal with a large quantity of images that are strongly associated with the user, to improve use experience of the user of the terminal.

In a possible implementation, the target image is further related to a target display style, and/or the target text is further related to the target display style.

In a possible implementation, the method further includes: receiving the target display style sent by the terminal, where the target display style is a display style selected by the user from a plurality of alternative display styles displayed on the terminal.

In a possible implementation, the target display style is a display style, among preset display styles, that is determined based on the multimedia content browsed by the user and that best matches the user.

In a possible implementation, generating the target image and the target text based on the first data and the second data includes: generating the target image and the target text through a target model by using the first data, the second data, and the target display style as inputs, where the target model has a function of generating a corresponding image and corresponding text based on input multimedia content that is browsed by the user and an input display style.

To be specific, the server may generate the target image and the target text through the target model by using the first data, the second data, and the target display style as the inputs. In this way, the target image and the target text are generated through the target model, so that diversity of the target image and the target text can be improved, to improve use experience of the user. The target model is a model that may generate a corresponding image and corresponding text based on input multimedia content that is browsed by the user and an input display style. In this way, a target image and/or target text that comply/complies with the target display style can be generated according to a user requirement, so that a pushed target image and pushed target text better match the user, to improve use experience of the user.

In a possible implementation, the target model includes an image generation model and a text generation model; and generating the target image and the target text through the target model by using the first data, the second data, and the target display style as the inputs includes: generating the target image through the image generation model by using the first data and the target display style as inputs; and generating the target text through the text generation model by using the second data as an input. This can achieve better effect of generation, so that the target image and the target text generated by the server better meet a requirement.

In a possible implementation, when the first data includes at least the metadata, the method further includes: obtaining a feature vector of the first data; and generating a first descriptor based on the metadata and the target display style, and generating a second descriptor based on the second data, where the first descriptor describes a feature of an image that needs to be generated, and the second descriptor describes a feature of text that needs to be generated. Generating the target image through the image generation model by using the first data and the target display style as the inputs includes: generating the target image through the image generation model by using the feature vector of the first data and the first descriptor as inputs. Generating the target text through the text generation model by using the second data as the input includes: generating the target text through the text generation model by using the second descriptor as an input. In this way, the target model on the server can determine the features of the image and the text that need to be generated, to output a target image and target text that better meet a requirement.

In a possible implementation, the method further includes: receiving first information from the terminal; and in response to the first information, deleting the target image and the target text from an image library corresponding to the user, where the image library stores a plurality of images and a plurality of pieces of text that are generated based on the multimedia content browsed by the user and the usage data generated when the user browses the multimedia content. In this way, content that the user is not interested in may no longer be pushed to the user, to improve use experience of the user.

According to a third aspect of embodiments of this application, this application further provides an apparatus. The apparatus has a function of implementing the behavior of the electronic device in the method according to the first aspect or the second aspect. The function may be implemented by hardware, or may be implemented by hardware executing corresponding software. The hardware or the software includes one or more modules corresponding to the foregoing function, for example, a processing module, a sending module, and a display module.

According to a fourth aspect of embodiments of this application, this application further provides an electronic device, including a memory and a processor. The memory is configured to store a computer program. The processor is configured to execute the computer program, to implement the method according to the first aspect.

According to a fifth aspect of embodiments of this application, this application further provides a server, including a memory and a processor. The memory is configured to store a computer program. The processor is configured to execute the computer program, to implement the method according to the second aspect.

According to a sixth aspect of embodiments of this application, this application further provides a computer-readable storage medium. The computer-readable storage medium stores a computer program. The computer program is used to implement the method according to the first aspect or the second aspect.

According to a seventh aspect of embodiments of this application, this application further provides a computer program product, including computer-readable code or a non-volatile computer-readable storage medium carrying computer-readable code. When the computer-readable code is run on an electronic device, a processor in the electronic device performs the method according to the first aspect or the second aspect.

According to an eighth aspect of embodiments of this application, this application further provides a chip. The chip includes a memory and a processor. The memory is configured to store a computer program. The processor is configured to invoke the computer program from the memory, and run the computer program to perform the method according to the first aspect or the second aspect.

### BRIEF DESCRIPTION OF DRAWINGS

FIG. 1 is a diagram of a lock screen interface in the related technology;
FIG. 2 is a diagram of another screen-off interface in the related technology;
FIG. 3 is a simplified diagram of a system architecture to which a method in embodiments of this application is applied according to an embodiment of this application;
FIG. 4 is a diagram of composition of a terminal according to an embodiment of this application;
FIG. 5 is a diagram of composition of a server according to an embodiment of this application;
FIG. 6A to FIG. 6C are a flowchart of an image display method according to an embodiment of this application;
FIG. 7 is a flowchart of another image display method according to an embodiment of this application;
FIG. 8 is a diagram of a terminal interface according to an embodiment of this application;
FIG. 9 is a diagram of generating a target image and target text according to an embodiment of this application;
FIG. 10 is a flowchart of an image generation method according to an embodiment of this application;
FIG. 11(a) and FIG. 11(b) are a diagram of another terminal interface according to an embodiment of this application; and
FIG. 12 is a diagram of still another terminal interface according to an embodiment of this application.

### DESCRIPTION OF EMBODIMENTS

A lock screen function, a desktop function, and a screen-off function are functions widely used in terminals such as a mobile phone, a computer, a tablet computer, a vehicle head unit, and a television, and these functions are indispensable during normal use of the terminal. For example, when using a terminal, a user needs to first enter a lock screen interface, and then perform unlocking to use another function of the terminal. For another example, when using an application installed on a terminal, a user usually also needs to first enter a desktop, and click/tap an application icon displayed on the desktop to start the application.

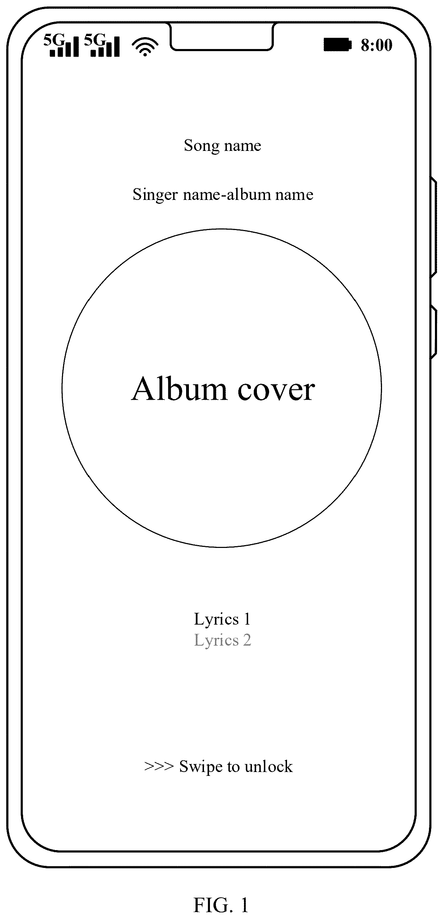

Based on the foregoing descriptions, information display in the lock screen interface, the desktop, and a screen-off interface is an important issue that needs to be considered. In the related technology, information may be displayed in the following manners.
1. A user selects an image stored on a terminal as a lock screen wallpaper and a desktop wallpaper, to display image information in a lock screen interface and a desktop. Alternatively, a user may select a theme as a theme of a mobile phone, where the theme is a personalized design that is designed and developed by an enterprise or an individual developer for a terminal skin interface of a terminal, for example, a lock screen, a wallpaper, an icon, a notification bar, SMS messages, a dial, contacts, and settings. Alternatively, a user selects a widget from preset widgets on a terminal, and displays the widget in a screen-off interface, to transfer related information through the widget. For example, a clock widget may transfer time information.
   The lock screen wallpaper, the desktop wallpaper, the theme, and the widget in the screen-off interface do not change after being selected by the user. This leads to lack of diversity of the lock screen interface, the desktop, and the screen-off interface, and it is difficult to attract interest of the user. However, the lock screen wallpaper, the desktop wallpaper, and the widget in the screen-off interface may actually be used as traffic entries to divert traffic to an application on the terminal. In this regard, a good opportunity for traffic display is wasted.
2. A lock screen wallpaper is a random image or a graphic magazine pushed by a system of a terminal or an application on a terminal. Consequently, lock screen content is usually weakly associated with a user, and the user is unfamiliar with the lock screen content. Even if the user spends time reading the lock screen content, because the lock screen content is weakly associated with the user, it is usually difficult to attract interest of the user in content displayed in a lock screen interface, and the user quickly skips the lock screen content. This wastes a traffic display opportunity created by the lock screen wallpaper serving as a traffic entry.
   In addition, a random image or a graphic magazine displayed in the lock screen interface usually comes from a single wallpaper provider. Consequently, a lock screen has a single source, failing to meet a personalized requirement of the user.
3. In addition to displaying a wallpaper in a lock screen interface, there is another lock screen interface display solution: Interface information of an application running in the background is displayed in a lock screen scenario. For example, when a user plays a song by using music software on a terminal, as shown in FIG. 1, content, such as a song name, a singer name, an album name, an album cover, and lyrics of the song being played on the terminal, is displayed in a lock screen interface, and a control for controlling playback of the song or the like may be further displayed.

In this solution, the lock screen interface is generated based on a template, and lacks diversity.

It can be learned that, in the related technology, the display solutions for the lock screen interface, the desktop, and the screen-off interface have the following problems: templatization; monotony and lack of diversity; lack of association between displayed content and a user, making it difficult to attract interest of the user; and the like.

In view of this, this application provides an image display method and an image generation method. When a user starts a first application, for example, a desktop application, a lock screen application, a screen-off application, or a system application, a target image related to multimedia content browsed by the user in another application may be displayed, and target text related to usage data generated when the user browses the multimedia content in the another application may be displayed.

In other words, the image display method applied to a terminal includes: receiving a first operation of starting a first application by a user; and displaying a target image and target text in response to the first operation. The target image is related to at least first data. The first data indicates multimedia content browsed by the user by using a second application. The first data includes at least one of the following data: metadata of the multimedia content, and media data of the multimedia content. The media data includes at least one of the following data of the multimedia content: text, audio, a video, and an image. The target text is related to at least second data. The second data indicates usage data generated when the user browses the multimedia content by using the second application.

In this way, the target image and the target text that are related to the multimedia content browsed by the user can be displayed in an interface of the lock screen application, the desktop application, the screen-off application, the system application, or the like. That is, both the target image and the target text are related to the user. In addition, usually, the user has historically browsed a large amount of multimedia content. In this case, corresponding target images and target text may be respectively generated based on a plurality of pieces of multimedia content browsed by the user. This also improves diversity of a lock screen interface, a desktop interface, a screen-off interface, or the like. In addition, such target images and target text help avoid monotony of an image generated based on a template, to improve usage of the user for the lock screen interface, the desktop interface, the screen-off interface, or the like, and improve use experience of the user.

Collection, storage, use, processing, transmission, provision, disclosure, and the like of personal user information in the technical solutions of this application all comply with related laws and regulations, and do not violate public order and good morals. For example, in the technical solutions of this application, the personal user information is processed with user authorization. This is uniformly described herein and is not described below again.

In terms of a use scenario of the solutions of this application, the first application may be an application that can display an image when started. For example, the first application in this application may be a lock screen application, a desktop application, a screen-off application, or a system application. In other words, this application may be applied to a wallpaper display scenario of a lock screen interface, a desktop interface, a screen-off interface, an application startup interface, or the like. For example, when the first application is the lock screen application, the target image and the target text may be displayed in the lock screen interface as a lock screen wallpaper. When the first application is the desktop application, the target image and the target text may be combined as a desktop wallpaper for display. When the first application is any one of the desktop application, the lock screen application, or the screen-off application, a corresponding theme may be generated based on the target image and the target text, and the target image and the target text are displayed in the foregoing three applications. When the first application is the system application, the target image and the target text may be displayed in a startup interface of the system application. To be specific, the target image and the target text may be combined as a wallpaper of the application startup interface. In addition, when a terminal manufacturer is in cooperation with a third-party application installed on the terminal, the target image and the target text may alternatively be displayed in a startup interface of the third-party application other than the system application.

The system application is an application developed by the terminal manufacturer, for example, an application that has been pre-installed when the terminal is purchased.

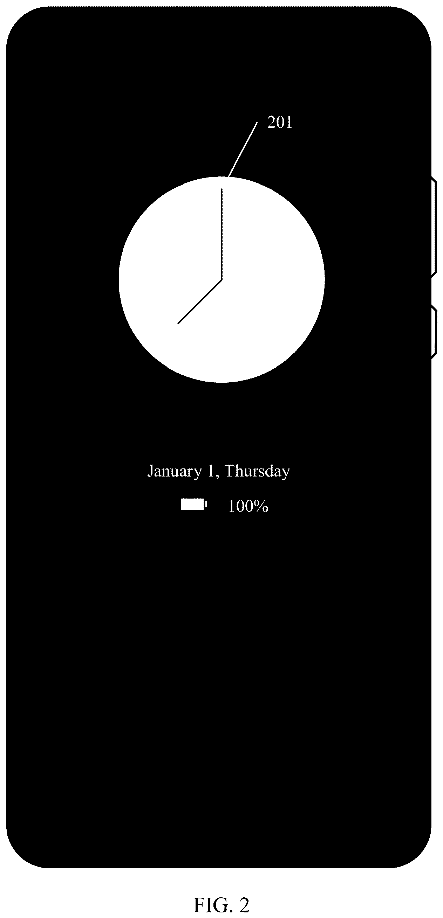

The screen-off interface is a display interface of the system application, and is an interface that the terminal may enter in a locked state before entering the lock screen interface. Usually, a widget may be added to the interface. The widget may also be referred to as a mini-component, a window mini-component, a window widget, or the like. As shown in FIG. 2, 201 in FIG. 2 is a widget, and the widget is configured to display time. In embodiments of this application, the target image and the target text may be displayed in the screen-off interface as widgets.

The first operation is an operation that can trigger the first application to start. For example, in a lock screen scenario, the first operation may be an operation that can wake up a screen, for example, pressing a lock screen button of the terminal or lifting the terminal. In a desktop scenario, the first operation may be an operation of returning to a desktop, for example, an operation of closing an application or returning to the desktop. In a screen-off scenario, the first operation may be an operation that can wake up the screen-off interface, for example, an operation of locking a screen or an operation of lifting the terminal. When the first application is the system application, the first operation may be an operation on an icon of the system application, an operation of switching from a background interface to the system application, or the like. Certainly, as described above, the first application may alternatively be another application that can display an image when started, for example, a third-party application that is installed on the terminal and that is released by an application development vendor.

The second application may be an application including multimedia content. For ease of understanding, the second application is referred to as a multimedia application below. The multimedia application mentioned in embodiments of this application may be a multimedia application developed by the terminal manufacturer, for example, may be a video application, a music application, a reading application, a podcast application, or a game application pre-installed on the terminal. In this embodiment, the target image may be generated based on a record of using, by the user, the multimedia application developed by the terminal manufacturer, to increase traffic of the multimedia application, and increase frequency of using the multimedia application by the user.

When the terminal manufacturer is in cooperation with the application development vendor and the user agrees to use usage data of an application developed by the application development vendor to generate a wallpaper or a widget for the lock screen interface, the desktop interface, the screen-off interface, or the like, the multimedia application may alternatively be a multimedia application developed by the application development vendor, for example, a third-party video application installed on the terminal.

In this application, the user may browse multimedia content by using the multimedia application on the terminal. The multimedia application is an application including multimedia content, and the multimedia content may include audio, a video, text, and the like. For example, when the multimedia application is the video application and the multimedia content is a video, the user may browse the video by using the video application on the terminal. For example, when the multimedia application is the music application and the multimedia content is music, the user may listen to the music by using the music application on the terminal. For example, when the multimedia application is the reading application and the multimedia content is text in a book, the user may read the book by using the reading application on the terminal. For example, when the multimedia application is the game application and the multimedia content is a screenshot and an introduction that correspond to a game, the user may browse the game introduction, install the game, enter the game application to play, and the like by using the game application on the terminal. It should be noted that the game application herein is not an application corresponding to a game, but is an application for managing a game installed on the terminal. In some terminals, the game application is referred to as a "game center".

For a relationship between the first application and the second application, in the foregoing examples, in the lock screen scenario, the desktop scenario, and the screen-off scenario, the first application and the second application may be different applications. For example, the first application is the lock screen application, and the second application may be the video application. In addition, in a scenario in which the first application is the system application, the first application and the second application may be a same application or different applications. For example, when the first application is a clock application and the second application is the multimedia application, the first application and the second application are different applications. When the first application is the multimedia application, the second application may be a multimedia application the same as the first application, or may be a multimedia application different from the first application. For example, when the first application is the video application developed by the terminal manufacturer, the second application may be the music application developed by the terminal manufacturer, or the second application may be the video application, or the second application may be the third-party video application installed on the terminal.

For the displayed target image and target text, the target image is related to the multimedia content browsed by the user. To be specific, a theme of the target image is the same as a theme of the multimedia content, or the target image is associated with specific content of the multimedia content. A specific form of the target image is not limited in this application, and any image related to the multimedia content may be used as the target image in this application.

For example, the multimedia content browsed by the user is a video about a scenery of a region, and the target image may be an image of the scenery of the region. For example, the target image may be a video frame of the video, or the target image may be a typical image mentioned in a subtitle of the video, or the target image may be an available public image of the scenery of the region that is found from a network, or the target image may be an image that is related to content in the video and that is generated based on one or more of a video frame, audio, and a subtitle in the video.

For another example, the multimedia content browsed by the user is a song, and the target image may be an image about the song. For example, the target image may be an album cover of the song. If the song has a corresponding music video (music video, MV), the target image may be a video frame of the music video. For example, the song is related to a youth theme, and the target image may be an available image that is related to the youth theme and that is found from a network, or the target image may be an image that is related to the song and that is generated based on one or more of audio, lyrics, and a video frame of the MV of the song.

For another example, the multimedia content browsed by the user is a book, and the target image may be an image about the book. For example, the target image may be a cover of the book, or the target image may be an image that is related to the book and that is found from a network, or the target image may be an image that is related to the book and that is generated based on one or more of a cover of the book and text in the book.

For another example, the multimedia content browsed by the user is a game, and the target image may be an image about the game. Similar to the foregoing examples, for example, the target image may be a promotion video or a promotion image of the game, or the target image may be an image that is related to the game and that is found from a network, or the target image may be an image that is related to the game and that is generated based on one or more of a video frame of the promotion video of the game, audio corresponding to the promotion video, a game introduction, and the like.

For an example in which the target image is generated based on the multimedia content, a specific image generation method is described in detail below, and details are not described herein. In addition, the foregoing examples are merely intended to help understand the solutions, and do not constitute a limitation on embodiments of this application.

The target text is text about usage data of the multimedia content browsed by the user. The usage data is data that describes browsing behavior of the user for the multimedia content, and may include: time at which the user browses the multimedia content, a progress of browsing the multimedia content by the user, whether the user adds the multimedia content to favorites or likes the multimedia content, whether the user comments on the multimedia content, an identifier of multimedia content corresponding to user behavior, and the like. That the target text is related to the usage data may be that the target text includes specific usage data and a title of multimedia content corresponding to the usage data. The title of the multimedia content corresponding to the usage data may be determined based on an identifier of the multimedia content that is included in the usage data. For example, the target text may be "You browsed the *Challenger* on January 1, 2023", or "Relive your experience: You browsed the *Challenger* on January 1, 2023". For another example, if the target image is related to content that is being watched by the user before a screen is locked, the target text may be "You are watching the *Challenger".* In addition, to help the user recall related content, the target text may further include data for describing the multimedia content. For example, the target text may include the metadata or the media data of the multimedia content. The metadata and the media data of the multimedia content are described in detail below, and details are not described herein.

The target text is displayed, to remind the user that the user has browsed the multimedia content corresponding to the target image, to improve interpretability of the target image. The target text enables the user to know content of the target image, so that the user knows that the target image is related to the multimedia content browsed by the user, to improve use experience of the user.

The target image and the target text may be related to the foregoing data. In addition, in some embodiments of this application, the target image may be further related to a target display style, and/or the target text may be further related to the target display style.

With regard to specific multimedia content related to the displayed target image and target text, the displayed target image and target text may be related to a history of browsing multimedia content by the user in a past period of time. A specific method is described in detail below, and details are not described herein. In addition, the displayed target image and target text may alternatively be related to multimedia content that is being browsed before the user locks a screen, closes an application, or returns to the desktop. For example, when it is determined that the user has browsed new multimedia content, a target image may be generated based on the multimedia content, target text is generated based on usage data of the multimedia content, and the target image and the target text are displayed after the lock screen interface, the screen-off interface, an application, or the desktop is entered.

With regard to the user in this application, in some embodiments, the user may correspond to a terminal. In view of this, the target image and the target text may be generated based only on a local browsing record of the second application on the terminal. To be specific, the browsing record of the second application on the terminal is used as data related to the user to generate the target image and the target text. In some other embodiments, the user may correspond to a user account, and the terminal may log in to the user account. Different terminals may log in to a same user account. In view of this, the target image and the target text may alternatively be generated based on browsing records of the second application on terminals that have logged in to a same user account. To be specific, browsing records of the second application on a plurality of terminals that have logged in to a same account may be used as data related to the user to generate the target image and the target text.

With regard to a device to which the method in this application is applied, the method in this application may be independently performed by a terminal, to protect user privacy. Alternatively, the solutions of this application may be implemented through interaction between a terminal and a server. Implementing the solutions of this application through interaction between the terminal and the server can reduce processing load of the terminal and save computing power of the terminal.

The following describes embodiments of this application by using an example in which a terminal interacts with a server and the method in embodiments of this application is applied to a lock screen interface.

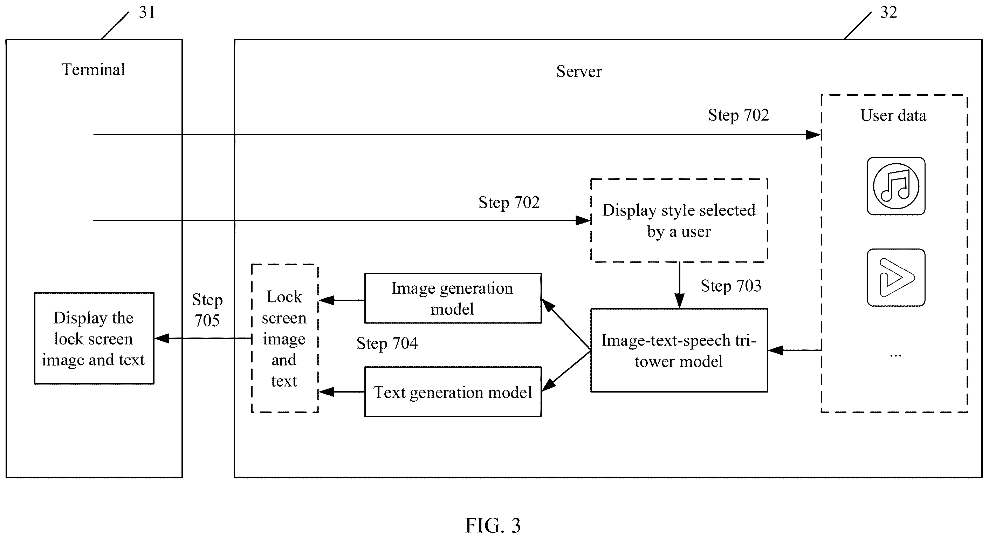

FIG. 3 is a simplified diagram of a system architecture to which the foregoing method may be applied according to an embodiment of this application. As shown in FIG. 3, the system includes at least a terminal 31 and a server 32.

During specific implementation, the terminal 31 may be a mobile phone, a tablet computer, a handheld computer, a personal computer (personal computer, PC), a cellular phone, a personal digital assistant (personal digital assistant, PDA), a wearable device (for example, a smartwatch), a smart home device (for example, a television), a vehicle-mounted computer, a game console, an augmented reality (augmented reality, AR)/virtual reality (virtual reality, VR) device, or the like. A specific device form of the terminal 31 is not particularly limited in this embodiment. The terminal 31 may include one or more applications. The application may be a system application, for example, a lock screen application, a desktop application, a screen-off application, or a video application, a reading application, a game application, or a music application that is preconfigured by a terminal manufacturer on a mobile phone. The application may alternatively be a third-party application.

In addition, the system may include a plurality of terminals, and the server 32 may simultaneously interact with the plurality of terminals, to provide target images and target text for the plurality of terminals.

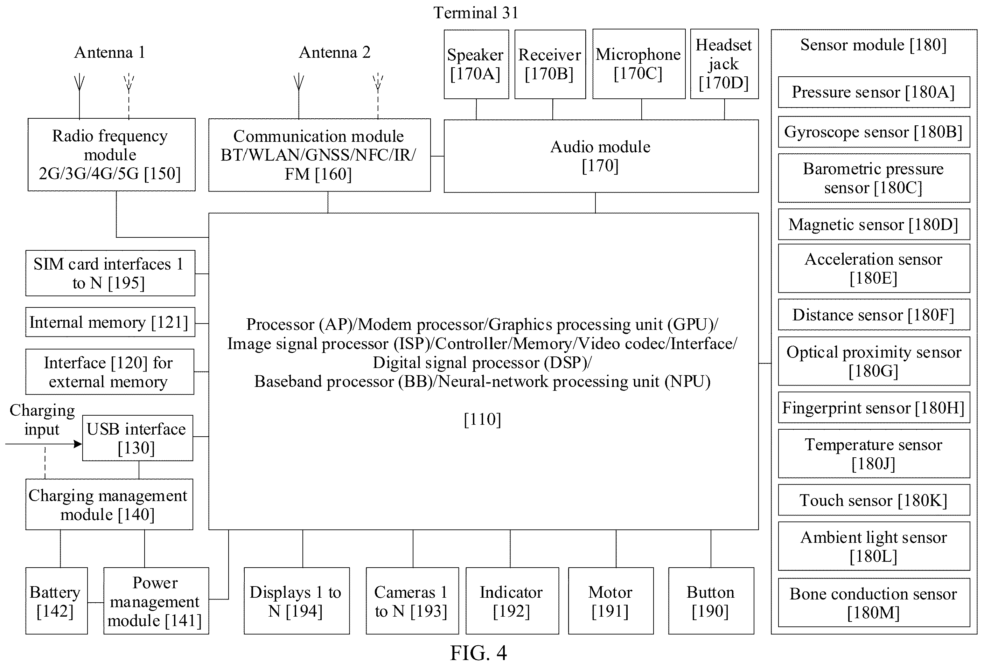

FIG. 4 is a diagram of a structure of a terminal according to an embodiment of this application. Methods in the following embodiments may be implemented on a terminal with the foregoing hardware structure.

As shown in FIG. 4, the terminal 31 may include a processor 110, an interface 120 for external memory, an internal memory 121, a USB interface 130, a charging management module 140, a power management module 141, a battery 142, an antenna 1, an antenna 2, a radio frequency module 150, a communication module 160, an audio module 170, a speaker 170A, a receiver 170B, a microphone 170C, a headset jack 170D, a sensor module 180, a button 190, a motor 191, an indicator 192, a camera 193, a display 194, a SIM card interface 195, and the like. The sensor module may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The touch sensor 180K, the microphone 170C, the antenna 1, the antenna 2, the radio frequency module 150, the communication module 160, and the like may serve as input devices of the terminal 31, to receive information input by a user or another device. The speaker 170A, the telephone receiver 170B, the display 194, and the like may serve as output devices of the terminal 31, to output various menus of the terminal 31, and information input by a user or information provided for a user.

The structure shown in this embodiment of the present invention does not constitute a limitation on the terminal 31. The terminal 31 may include more or fewer components than those shown in the figure, or some components may be combined, or some components may be split, or the components may be arranged differently. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (Neural-network Processing Unit, NPU). Different processing units may be independent components, or may be integrated into a same processor.

The controller may be a decision maker that directs components of the terminal 31 to operate in coordination according to an instruction, and is a nerve center and a command center of the terminal 31. The controller generates an operation control signal based on an instruction operation code and a timing signal, to control instruction fetching and instruction execution.

A memory may be further disposed in the processor 110 to store instructions and data. In some embodiments, the memory in the processor is a cache. The memory may store instructions or data that has been used or is cyclically used by the processor. If the processor needs to use the instructions or the data again, the processor may directly invoke the instructions or the data from the memory. This avoids repeated access, reduces waiting time of the processor, and therefore improves system efficiency.

In this embodiment of this application, the processor 110 may be configured to perform steps in embodiments of this application. For example, the processor 110 may be configured to: control the display 194 to display a target image and target text; and after receiving a first operation of a user, process the first operation, and trigger a process of controlling the display 194 to display the target image and the target text. In addition, the processor 110 may further perform a function of obtaining a target style and the like through steps in the following embodiments. For specific descriptions, refer to the following descriptions.

In some embodiments, the processor 110 may include an interface. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronous serial bus, and includes a serial data line (serial data line, SDA) and a serial clock line (serial clock line, SCL). In some embodiments, the processor may include a plurality of groups of I2C buses. The processor may be coupled to the touch sensor, a charger, a flash, the camera, and the like through different I2C bus interfaces. For example, the processor may be coupled to the touch sensor through the I2C interface, so that the processor communicates with the touch sensor through the I2C bus interface, to implement a touch function of the terminal 31.

The I2S interface may be used for audio communication. In some embodiments, the processor may include a plurality of groups of I2S buses. The processor may be coupled to the audio module through the I2S bus, to implement communication between the processor and the audio module. In some embodiments, the audio module may transmit an audio signal to the communication module through the I2S interface, to implement a function of answering a call through a Bluetooth headset.

The PCM interface may also be used for audio communication, and sampling, quantization, and encoding of an analog signal. In some embodiments, the audio module may be coupled to the communication module through the PCM bus interface. In some embodiments, the audio module may alternatively transmit an audio signal to the communication module through the PCM interface, to implement a function of answering a call through a Bluetooth headset. Both the I2S interface and the PCM interface may be used for audio communication, and the two interfaces have different sampling rates.

The UART interface is a universal serial data bus, and is used for asynchronous communication. The bus is a two-way communication bus. The bus converts to-be-transmitted data between serial communication and parallel communication. In some embodiments, the UART interface is usually configured to connect the processor to the communication module 160. For example, the processor communicates with a Bluetooth module through the UART interface, to implement a Bluetooth function. In some embodiments, the audio module may transmit an audio signal to the communication module through the UART interface, to implement a function of playing music through a Bluetooth headset.

The MIPI interface may be configured to connect the processor to a peripheral component, for example, the display or the camera. The MIPI interface includes a camera serial interface (camera serial interface, CSI), a display serial interface (display serial interface, DSI), and the like. In some embodiments, the processor communicates with the camera through the CSI interface, to implement an image shooting function of the terminal 31. The processor communicates with the display through the DSI interface, to implement a display function of the terminal 31.

The GPIO interface may be configured by software. The GPIO interface may be configured as a control signal or a data signal. In some embodiments, the GPIO interface may be configured to connect the processor to the camera, the display, the communication module, the audio module, the sensor, and the like. The GPIO interface may alternatively be configured as an I2C interface, an I2S interface, a UART interface, an MIPI interface, or the like.

The USB interface 130 may be a mini USB interface, a micro USB interface, a USB Type-C interface, or the like. The USB interface may be configured to connect to a charger to charge the terminal 31, or may be configured to transmit data between the terminal 31 and a peripheral device, or may be used for connecting a headset for playing audio through the headset, or may be used for connecting another electronic device, for example, an AR device.

An interface connection relationship between the modules shown in this embodiment of the present invention is merely an example for description, and does not constitute a limitation on the structure of the terminal 31. The terminal 31 may use an interface connection mode different from that in this embodiment of the present invention, or use a combination of a plurality of interface connection modes.

The charging management module 140 is configured to receive a charging input from a charger. The charger may be a wireless charger or a wired charger. In some embodiments of wired charging, the charging management module may receive a charging input from a wired charger through the USB interface. In some embodiments of wireless charging, the charging management module may receive a wireless charging input through a wireless charging coil of the terminal 31. When charging the battery, the charging management module may further supply power to the terminal device through the power management module 141.

The power management module 141 is configured to connect to the battery 142, the charging management module 140, and the processor 110. The power management module receives an input from the battery and/or the charging management module, and supplies power to the processor, the internal memory, an external memory, the display, the camera, the communication module, and the like. The power management module may be further configured to monitor parameters such as a battery capacity, a quantity of battery cycles, and a battery health status (electric leakage or impedance). In some embodiments, the power management module 141 may alternatively be disposed in the processor 110. In some embodiments, the power management module 141 and the charging management module may alternatively be disposed in a same component.

A wireless communication function of the terminal 31 may be implemented by the antenna 1, the antenna 2, the radio frequency module 150, the communication module 160, a modem, the baseband processor, and the like.

The antenna 1 and the antenna 2 are configured to transmit and receive an electromagnetic wave signal. Each antenna in the terminal 31 may be configured to cover one or more communication frequency bands. Different antennas may be further reused to improve antenna utilization. For example, an antenna of a cellular network may be reused as a diversity antenna of a wireless local area network. In some embodiments, the antenna may be used in combination with a tuning switch.

The radio frequency module 150 may be a communications processor module that provides a solution applied to the terminal 31 for wireless communication such as 2G, 3G, 4G, and 5G. The radio frequency module 150 may include at least one filter, a switch, a power amplifier, a low noise amplifier (Low Noise Amplifier, LNA), and the like. The radio frequency module receives an electromagnetic wave through the antenna 1, perform processing such as filtering or amplification on the received electromagnetic wave, and transmit a processed electromagnetic wave to the modem for demodulation. The radio frequency module may further amplify a signal modulated by the modem, and convert an amplified signal into an electromagnetic wave for radiation through the antenna 1. In some embodiments, at least some functional modules of the radio frequency module 150 may be disposed in the processor 150. In some embodiments, at least some functional modules of the radio frequency module 150 may be disposed in a same component as at least some modules of the processor 110.

The modem may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then the demodulator transmits the low-frequency baseband signal obtained through demodulation to the baseband processor for processing. The low-frequency baseband signal is processed by the baseband processor, and then a processed signal is transmitted to the application processor. The application processor outputs a sound signal through an audio device (not limited to the speaker, the receiver, and the like), or displays an image or a video through the display. In some embodiments, the modem may be an independent component. In some embodiments, the modem may be independent of the processor, and is disposed in a same component as the radio frequency module or another functional module.

The communication module 160 may be a communications processor module that provides a solution applied to the terminal 31 for wireless communication such as a wireless local area network (wireless local area network, WLAN), Bluetooth (Bluetooth, BT), a global navigation satellite system (global navigation satellite system, GNSS), frequency modulation (frequency modulation, FM), near field communication (near field communication, NFC), and an infrared (infrared, IR) technology. The communication module 160 may be one or more components integrating at least one communications processor module. The communication module receives an electromagnetic wave through the antenna 2, performs frequency modulation and filtering on an electromagnetic wave signal, and sends a processed signal to the processor. The communication module 160 may further receive a to-be-sent signal from the processor, perform frequency modulation and amplification on the signal, and convert a processed signal into an electromagnetic wave for radiation through the antenna 2.

In some embodiments, the antenna 1 of the terminal 31 is coupled to the radio frequency module, and the antenna 2 is coupled to the communication module. In this way, the terminal 31 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

A communication function of the terminal enables the terminal 31 to communicate with the server 32, to obtain a target image and target text from the server 32 through the foregoing modules. In some embodiments, a mobile phone may further send, to the server through the foregoing modules, a target display style, usage data of a user for multimedia content in a second application, and the like.

The terminal 31 implements a display function through the GPU, the display 194, the application processor, and the like. For example, the terminal 31 may display the target image and the target text through the foregoing components. In some embodiments, the mobile phone may further display a control, an alternative display style, and the like through the foregoing modules, to complete interaction between the mobile phone and the user. The GPU is a microprocessor for image processing, and is connected to the display and the application processor. The GPU is configured to perform mathematical and geometric computation for graphics rendering. The processor 110 may include one or more GPUs that execute program instructions to generate or change displayed information.

The display 194 is configured to display an image, a video, or the like. The display includes a display panel. The display panel may be an LCD (liquid crystal display, liquid crystal display), an OLED (organic light-emitting diode, organic light-emitting diode), an active-matrix organic light-emitting diode (active-matrix organic light-emitting diode, AMOLED), a mini-LED, a micro-LED, a micro-OLED, a quantum dot light-emitting diode (quantum dot light-emitting diode, QLED), or the like. In some embodiments, the terminal 31 may include one or N displays, where N is a positive integer greater than 1.

Still as shown in FIG. 4, the terminal 31 may implement an image shooting function through the ISP, the camera 193, the video codec, the GPU, the display, the application processor, and the like.

The ISP is configured to process data fed back by the camera. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, luminance, and complexion of the image. The ISP may further optimize parameters such as exposure and color temperature of an image shooting scene. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the terminal 31 may include one or N cameras, where N is a positive integer greater than 1.

The digital signal processor is configured to process a digital signal, and may further process other digital signals in addition to the digital image signal. For example, when the terminal 31 selects a frequency, the digital signal processor is configured to perform Fourier transform on frequency energy.

The video codec is configured to compress or decompress a digital video. The terminal 31 may support one or more types of codecs. In this way, the terminal 31 may play or record videos in a plurality of coding formats, for example, MPEG-1, MPEG-2, MPEG-3, and MPEG-4.

The NPU is a neural-network (neural-network, NN) computing processor that quickly processes input information with reference to a structure of a biological neural network, for example, a mode of transfer between human brain neurons, and may further continuously perform self-learning. Intelligent cognition applications, such as image recognition, facial recognition, speech recognition, and text understanding, of the terminal 31 may be implemented through the NPU.

The interface 120 for external memory may be used for connecting an external memory card, for example, a microSD card, to extend a storage capability of the terminal 31. The external memory card communicates with the processor through the interface for external memory, to implement a data storage function. For example, files such as music and videos are stored in the external memory card.

The internal memory 121 may be configured to store computer-executable program code. The executable program code includes instructions. The processor 110 runs the instructions stored in the internal memory 121 to perform various function applications and data processing of the mobile phone. The internal memory 121 may include a program storage area and a data storage area. The program storage area may store an operating system, an application program for at least one function (for example, a lock screen function, a desktop function, or a screen-off function), and the like. The data storage area may store data (for example, a target image and target text that are to be displayed) created during use of the mobile phone, and the like. In addition, the internal memory 121 may include a high-speed random access memory, or may include a non-volatile memory, for example, at least one magnetic disk storage device, a flash memory, or a universal flash storage (universal flash storage, UFS).

In this embodiment of this application, the internal memory 121 may specifically include a RAM (random access memory, random access memory) and a ROM (read-only memory, read-only memory). The RAM is an internal memory that directly exchanges data with the processor 110, and is also referred to as a main memory (or a memory). The RAM supports reading and writing at any time at a quite high speed, and usually serves as a temporary data storage medium for an operating system or another running program. Data stored in the ROM can be easily read, but the ROM is not like the RAM in which data can be quickly and conveniently rewritten. However, the data stored in the ROM is stable, and the stored data does not change after a power failure. A structure of the ROM is simple, and reading is convenient, so that the ROM is usually used to store various permanent programs and data.

The RAM and the ROM may include one or more partitions.

The ROM is used as an example. As shown in FIG. 2, the ROM may include a system partition (for example, a system partition and a recovery partition), a program partition (for example, a data partition), a storage partition (for example, an SD card partition), and the like. The system partition may be used to store resources such as an operating system (for example, an Android system), a restoration and backup system, swap space, and underlying hardware space. The program partition is used to store a third-party app installed on the terminal. For each app, the terminal may correspondingly create a data directory in the data partition. For example, if a package name of an app is weixin.com, a directory named weixin.com may be created in the data partition. Application data generated during running of the app, such as a chat record and a transferred file, may be stored in the directory named weixin.com. In addition, the app can operate only data in the directory, and cannot operate a directory of another app. The storage partition is similar to a "removable hard disk drive" that is recognized after the mobile phone is connected to a PC. This part of space may be allocated by the user, and may be used to store data such as music, pictures, videos, and data packets of large games.

The terminal 31 may further dynamically create a new partition in the RAM or the ROM. For example, if 2G of space in a ROM with a size of 4G is not occupied, the terminal 31 may create a partition named "aaa" in the 2G of space. Certainly, the terminal 31 may alternatively dynamically destroy the previously created new partition. After the new partition is destroyed, data in the partition is also destroyed.

In this embodiment of this application, when the terminal 31 is restored to factory settings, one or more partitions in the ROM of the terminal 31 are usually formatted (format). For example, the terminal 31 may format the data partition in the ROM, and delete all files and folders in the data partition. In this way, all applications installed in the data partition and data in each application are cleared, and the terminal 31 is restored to a state available when the terminal 31 is delivered for sale.

The terminal 31 may implement an audio function, for example, music playing or recording, through the audio module 170, the speaker 170A, the receiver 170B, the microphone 170C, the headset jack 170D, the application processor, and the like.

The audio module is configured to convert digital audio information into an analog audio signal for output, and is also configured to convert an analog audio input into a digital audio signal. The audio module may be configured to encode and decode an audio signal. In some embodiments, the audio module may be disposed in the processor 110, or some functional modules of the audio module are disposed in the processor 110.

The speaker 170A, also referred to as a "loudspeaker", is configured to convert an audio electrical signal into a sound signal. The terminal 31 may be used to listen to music or answer a call in a hands-free mode through the speaker.

The receiver 170B, also referred to as an "earpiece", is configured to convert an audio electrical signal into a sound signal. When a call is answered or a voice message is listened to through the terminal 31, the receiver may be put close to a human ear to listen to a voice.

The microphone 170C, also referred to as a "mike" or a "mic", is configured to convert a sound signal into an electrical signal. When making a call or sending a voice message, a user may move the mouth of the user near the microphone to make a sound, to input a sound signal to the microphone. At least one microphone may be disposed in the terminal 31. In some embodiments, two microphones may be disposed in the terminal 31, to collect a sound signal and implement a noise reduction function. In some embodiments, three, four, or more microphones may alternatively be disposed in the terminal 31, to collect a sound signal, implement noise reduction, and recognize a sound source, to implement a directional recording function and the like.

The headset jack 170D is used for connecting a wired headset. The headset jack may be a USB interface, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor may be disposed in the display. There are many types of pressure sensors, for example, a resistive pressure sensor, an inductive pressure sensor, and a capacitive pressure sensor. The capacitive pressure sensor may include at least two parallel plates made of conductive materials. When a force is applied to the pressure sensor, capacitance between electrodes changes. The terminal 31 determines pressure intensity based on the capacitance change. When a touch operation is performed on the display, the terminal 31 detects intensity of the touch operation based on the pressure sensor. The terminal 31 may also calculate a touch position based on a detection signal of the pressure sensor. In some embodiments, touch operations that are performed at a same touch location but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is executed.

The gyroscope sensor 180B may be configured to determine a motion attitude of the terminal 31. In some embodiments, an angular velocity of the terminal 31 around three axes (that is, axes x, y, and z) may be determined by the gyroscope sensor. The gyroscope sensor may be configured to implement image stabilization during image shooting. For example, when the shutter is pressed, the gyroscope sensor detects an angle at which the terminal 31 shakes, calculates, based on the angle, a distance for which a lens module needs to compensate, and allows the lens to cancel the shake of the terminal 31 through reverse motion, to implement image stabilization. The gyroscope sensor may be further used in a navigation scenario and a somatic game scenario.

The barometric pressure sensor 180C is configured to measure barometric pressure. In some embodiments, the terminal 31 calculates an altitude based on a value of the barometric pressure measured by the barometric pressure sensor, to provide assistance for positioning and navigation.

The magnetic sensor 180D includes a Hall effect sensor. The terminal 31 may detect opening and closing of a flip leather case through the magnetic sensor. In some embodiments, when the terminal 31 is a clamshell phone, the terminal 31 may detect opening and closing of a flip cover based on the magnetic sensor. Further, a feature, for example, automatic unlocking, of the flip cover is set based on a detected opening/closing state of the leather case or a detected opening/closing state of the flip cover.

The acceleration sensor 180E may detect accelerations of the terminal 31 in various directions (usually on three axes). When the terminal 31 is still, a magnitude and a direction of gravity may be detected. The acceleration sensor 180E may be further configured to recognize a posture of the terminal, and is used in landscape/portrait mode switching or an application, for example, a pedometer.

The distance sensor 180F is configured to measure a distance. The terminal 31 may measure a distance by using infrared or laser. In some embodiments, in an image shooting scenario, the terminal 31 may measure a distance through the distance sensor, to implement quick focusing.

The optical proximity sensor 180G may include, for example, a light-emitting diode (LED) and an optical detector, for example, a photodiode. The light-emitting diode may be an infrared light-emitting diode. The light-emitting diode emits infrared light. Infrared reflected light from a nearby object is detected through the photodiode. When sufficient reflected light is detected, it can be determined that an object exists near the terminal 31. When insufficient reflected light is detected, it can be determined that no object exists near the terminal 31. The terminal 31 may detect, through the optical proximity sensor, that a user holds the terminal 31 close to an ear for a call, to automatically turn off a screen for power saving. The optical proximity sensor may also be used in a smart cover mode or a pocket mode for automatic screen unlocking or locking.

The ambient light sensor 180L is configured to sense luminance of ambient light. The terminal 31 may adaptively adjust luminance of the display based on the sensed luminance of ambient light. The ambient light sensor may also be configured to automatically adjust white balance during photographing. The ambient light sensor may further cooperate with the optical proximity sensor to detect whether the terminal 31 is in a pocket, to avoid mistouch.

The fingerprint sensor 180H is configured to collect a fingerprint. The terminal 31 may use a feature of the collected fingerprint to implement fingerprint-based unlocking, application lock access, fingerprint-based photographing, fingerprint-based call answering, and the like. In a lock screen application, identity authentication during unlocking may be performed through the fingerprint sensor. In this embodiment of this application, the mobile phone may perform a function of unlocking in a lock screen interface through the fingerprint sensor.

The temperature sensor 180J is configured to detect temperature. In some embodiments, the terminal 31 executes a temperature processing policy based on the temperature detected by the temperature sensor 180J. For example, when the temperature reported by the temperature sensor exceeds a threshold, the terminal 31 degrades performance of a processor near the temperature sensor, to reduce power consumption for thermal protection.

The touch sensor 180K is also referred to as a "touch panel", and may be disposed in the display. The touch sensor is configured to detect a touch operation performed on or near the touch sensor. The touch sensor may transmit the detected touch operation to the application processor to determine a type of a touch event, and provide a corresponding visual output through the display.

An operation performed by the user on the mobile phone, for example, an operation of starting the lock screen application by the user or an operation of selecting or tapping a control by the user, may be recognized through the touch sensor.

The bone conduction sensor 180M may obtain a vibration signal. In some embodiments, the bone conduction sensor may obtain a vibration signal from a vibration bone of a human vocal-cord part. The bone conduction sensor may also be in contact with a body pulse to receive a blood pressure beating signal. In some embodiments, the bone conduction sensor may alternatively be disposed in a headset. The audio module 170 may obtain a speech signal through parsing based on the vibration signal obtained by the bone conduction sensor from the vibration bone of the vocal-cord part, to implement a speech function. The application processor may parse heart rate information based on the blood pressure beating signal obtained by the bone conduction sensor, to implement a heart rate detection function.

The button 190 includes a power button, a volume button, and the like. The key may be a mechanical key, or a touch button. The terminal 31 receives an input on the button, and generate a button signal input related to a user setting and function control of the terminal 31.

The motor 191 may generate a vibration prompt. The motor may be configured to produce an incoming call vibration prompt or a touch vibration feedback. For example, touch operations performed on different applications (for example, photographing and audio playing) may correspond to different vibration feedback effects. Touch operations performed on different areas of the display may also correspond to different vibration feedback effects. Different application scenarios (for example, a time reminder, information reception, an alarm clock, and a game) may also correspond to different vibration feedback effects. Touch vibration feedback effects may be further customized.

The indicator 192 may be an indicator light, and may be configured to indicate a charging status and a battery level change, or may be configured to indicate a message, a missed call, a notification, and the like.

The SIM card interface 195 is used for connecting a subscriber identity module (subscriber identity module, SIM). A SIM card may be inserted into the SIM card interface or removed from the SIM card interface, to implement contact with or separation from the terminal 31. The terminal 31 may support one or N SIM card interfaces, where N is a positive integer greater than 1. The SIM card interface may support a nano-SIM card, a micro-SIM card, a SIM card, and the like. A plurality of cards may be inserted in a same SIM card interface at the same time. The plurality of cards may be of a same type or different types. The SIM card interface may also be compatible with different types of SIM cards. The SIM card interface may also be compatible with an external memory card. The terminal 31 interacts with a network through the SIM card, to implement functions such as calling and data communication. In some embodiments, an eSIM, namely, an embedded SIM card, is used for the terminal 31. The eSIM card may be embedded into the terminal 31, and cannot be separated from the terminal 31.

A software system of the terminal 31 may use a hierarchical architecture, an event-driven architecture, a microkernel architecture, a microservice architecture, or a cloud architecture. In embodiments of the present invention, an Android system with a hierarchical architecture is used as an example to describe a software structure of the terminal 31.

In the hierarchical architecture, software is divided into several layers, and each layer has a clear role and task. The layers communicate with each other through an interface. In some embodiments, the Android system is divided into four layers: an application layer, an application framework layer, an Android runtime and system library, and a kernel layer from top to bottom.

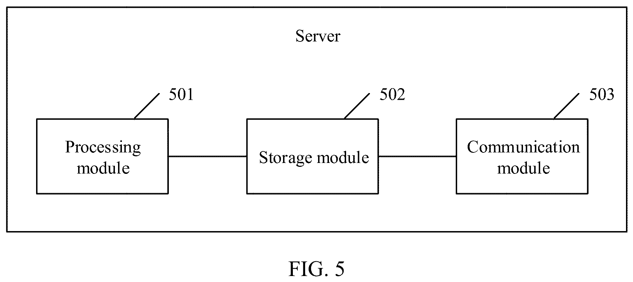

In embodiments, FIG. 5 is a diagram of a structure of a server according to an embodiment of this application. As shown in FIG. 5, the server 32 may include a processing module 501, a storage module 502, a communication module 503, and the like.

The processing module 301 is a control center of the system. For example, the processing module 501 may be any one or a combination of a CPU, a GPU, a field programmable gate array (field programmable gate array, FPGA), and an application-specific integrated circuit (application-specific integrated circuit, ASIC).

The storage module 502 is configured to store data. For example, the storage module 502 may be configured to store usage data of a user and data corresponding to multimedia content. The storage module 502 can further store computer instructions, and the processing module 501 reads and executes the computer instructions stored in the storage module 502, to implement a function of the server.

The communication module 503 is configured to perform communication between the server and a terminal.

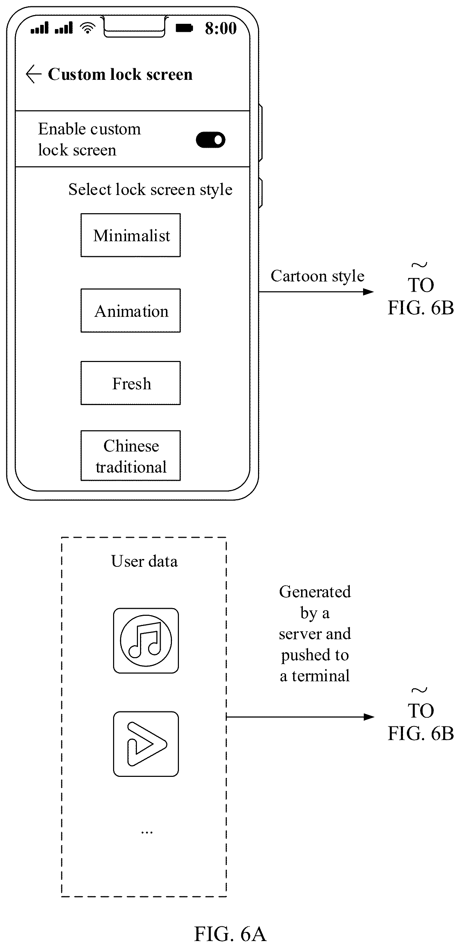

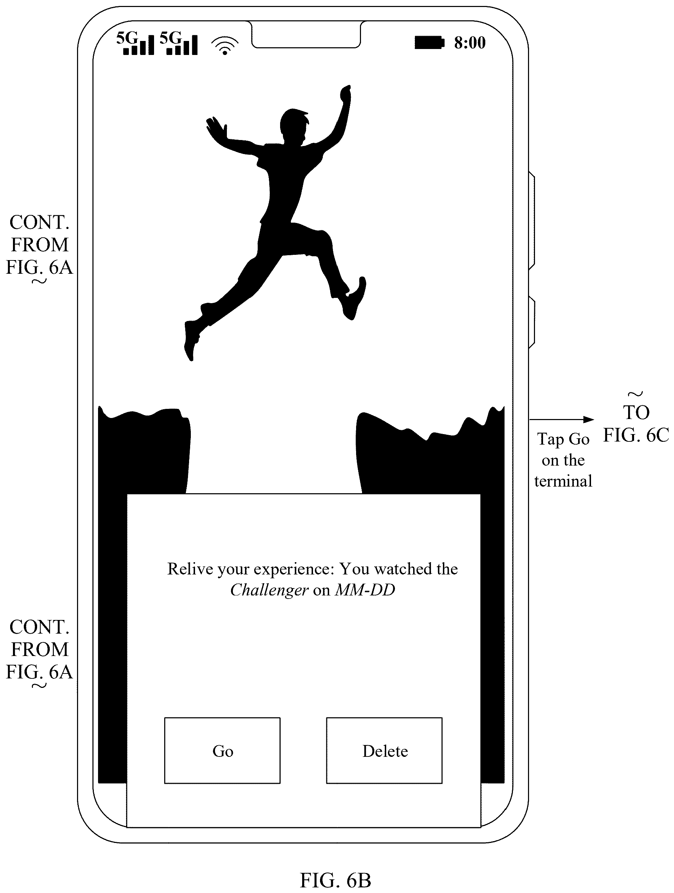

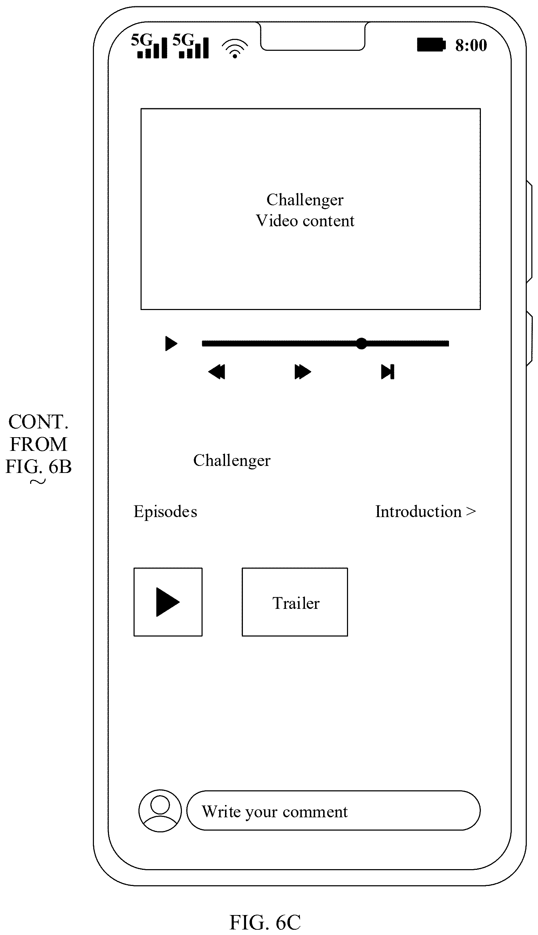

The following briefly describes the method in embodiments with reference to FIG. 3 and FIG. 6A to FIG. 6C. In FIG. 3, a solid-line box represents a module in a server or a terminal, or an action performed by a module, and a dashed-line box represents data stored on the terminal or the server.

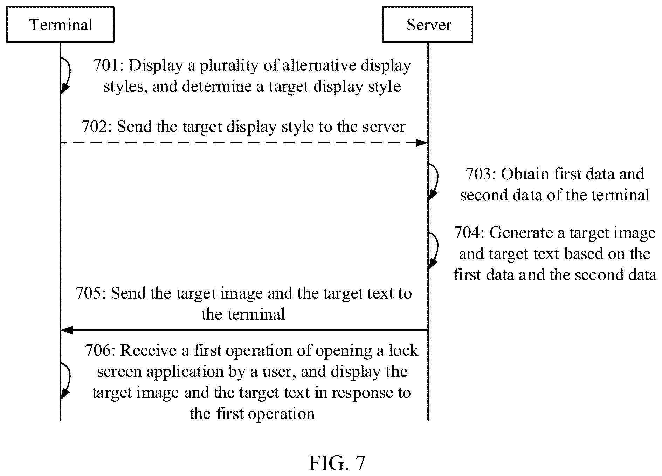

In a system in embodiments of this application, as shown in FIG. 3, in step 702 marked in FIG. 3, a terminal 31 is responsible for sending, to a server 32, usage data generated when a user browses a multimedia application, and is responsible for assisting the user in selecting a display style. For a specific process, refer to the following descriptions of step 702 in FIG. 7. In correspondence to FIG. 6A to FIG. 6C, the terminal may provide the user with a window for enabling a "custom lock screen" function, and a plurality of preset display styles, such as a "Minimalist" style, an "ACG (Animation, Comics, and Games)" style, a "Fresh" style, and a "Chinese traditional" style, may be further displayed in the window. The preset display style may alternatively be another display style, for example, a " Cartoon" style. This is not specifically limited in this embodiment. The user may select one display style from the plurality of preset display styles, and the selected display style is a style of at least one of a target image and target text that are generated.

In FIG. 3, as shown in step 703 marked in FIG. 3, the server 32 may use the display style selected by the user and user data as inputs. As shown in step 704, a target image and target text may be generated through an artificial intelligence model based on the input data, where the target image and the target text constitute a lock screen image and text. The user data herein may include usage data of the user and data of multimedia content browsed by the user, and the terminal may send only the usage data of the user to the server. The artificial intelligence model may include an image-text-speech tri-tower model for extracting a feature, an image generation model for generating an image, and a text generation model for generating text. The user data herein includes usage data of the user for multimedia content, and metadata and/or media data corresponding to the multimedia content. For specific implementation processes of step 703 and step 704, refer to the following descriptions of FIG. 7. Although FIG. 3 shows two multimedia applications, it should be noted that the multimedia application may further include a game application, a reading application, and the like. In correspondence to FIG. 6A to FIG. 6C, the server may generate, based on the user data and the display style selected by the user, a lock screen image and text corresponding to the display style selected by the user.

In step 705 marked in FIG. 3, the server 32 in FIG. 3 may send the generated lock screen image and text to the terminal 31. For a specific implementation process, refer to the following descriptions of step 705 in FIG. 7. After receiving the lock screen image and text sent by the server 32, the terminal 31 may display the received lock screen image and text in a lock screen interface. In correspondence to FIG. 6A to FIG. 6C, the terminal may display the lock screen image and text generated based on the display style selected by the user. Further, the user may perform an operation on the lock screen image and text, and the terminal may jump to an interface of multimedia content, in the multimedia application, that corresponds to the lock screen image and text. For example, the lock screen image and text are generated based on a movie browsed by the user, that is, *Challenger,* and a selected display style, that is, the "Minimalist" style. In FIG. 6A to FIG. 6C, the terminal may display, as a lock screen wallpaper, a "Minimalist"-style lock screen image and text that are related to the movie *Challenger.* For example, the *Challenger* is a movie about a user challenging a limit, and the movie includes a video frame of the user jumping across a cliff. In this case, a minimalist-style image shown in FIG. 6A to FIG. 6C may be generated. In addition, the user may further perform an operation in the lock screen interface, to trigger the terminal to directly jump from the lock screen interface to a details interface of the *Challenger* in a video application. It should be noted that the *Challenger* herein is only an example for ease of description, and does not correspond to an actual movie.

It should be noted that the embodiments shown in FIG. 6A to FIG. 6C and FIG. 3 do not constitute a limitation on this application. For example, in another embodiment of this application, the terminal 31 may not assist the user in selecting a display style. In this case, the server 32 may use only the user data as an input, and generate a lock screen image and text through the artificial intelligence model. For still another example, the user may not manually enable the "Custom lock screen" function, and the function may be in an enabled state by default; and the user may alternatively not select a display style, and the display style may be a default style, or the display style is a display style that the user may prefer to use and that is obtained by analyzing multimedia content historically browsed by the user. The server 32 alternatively may generate the target image, the target text, and the like without using the artificial intelligence model.

The following describes embodiments of this application in detail with reference to FIG. 7. In a scenario in which the method in this application is implemented through interaction between a terminal and a server, among steps shown in FIG. 7, step 701 and step 702 indicated by dashed lines are optional. To be specific, step 701 and step 702 may not be performed. FIG. 7 is a flowchart according to an embodiment of this application. The flowchart includes the following steps.

Step 701: The terminal displays a plurality of alternative display styles, and determines a target display style.

In this embodiment of this application, the target display style is a display style selected by a user from the plurality of alternative display styles that are displayed. The display style is a style of a displayed image and/or text. For example, the display style may be a "Minimalist" style or an "ACG" style. The target display style is a style of a target image and/or target text that need/needs to be generated in a subsequent step.

In a possible implementation, step 701 may specifically include: The terminal displays the plurality of alternative display styles, and receives a selection operation of the user on the target display style among the plurality of alternative display styles. The terminal may determine a display style selected by the user as the target display style.

The selection operation may be specifically a trigger operation of the user on a control corresponding to the target display style in an interface, for example, may be specifically that the user clicks/taps the control corresponding to the target display style on a display.

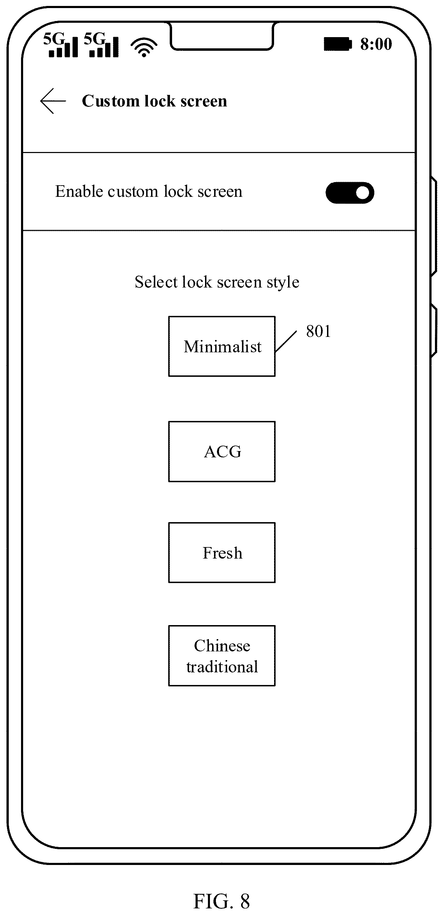

In an example, the target display style is a style of a target image that needs to be generated, and the terminal is a mobile phone. The user may enable a custom lock screen function in a corresponding setting interface. The mobile phone displays an interface shown in FIG. 8 in response to the operation of enabling the custom lock screen function by the user. The interface includes a plurality of alternative display styles. FIG. 8 shows four alternative display styles, and each alternative display style corresponds to a control. For example, the target display style is the "Minimalist" style, and the selection operation may be a tap operation of the user on a control 801. In response to the tap operation for the control 801, the mobile phone determines that the target display style is the minimalist style.

Herein, only an example in which the target display style is a style of the target image that needs to be generated is used for description. It can be understood that the selected target display style may be a style of the target image and the target text. Alternatively, after a display style of the target image is determined, the foregoing process may be repeated for the target text, to separately determine a style corresponding to the target text. That is, styles of the target image and the target file that need to be generated may be the same or different.

Step 702: The terminal sends the target display style to the server.

After the terminal sends the target display style to the server, the server may receive the target display style from the terminal. In this embodiment, the target image and the target text are generated by the server. Therefore, after determining the target display style, the terminal may send the target display style to the server, so that the server may determine that the user has enabled the custom lock screen function, and determine, through parsing based on received information, the target display style selected by the user, to subsequently generate a target image and/or target text corresponding to the target display style.

In addition to performing step 702 to send the target display style to the server, the terminal may further send usage data of the user to the server. To be specific, in a process in which the user uses a multimedia application on the terminal, the terminal usually needs to send the usage data of the user to the server. For example, for a video application, when the user has watched a video by using the video application, the video application may send, to the server based on a usage history of the user, usage data indicating that the user has watched the video within the time period. To be specific, the usage data may include time at which the user watches the video and an identifier of the watched video. In addition, the usage data may further include a watching progress of the user, content of a bullet screen and a comment sent by the user, time at which the user sends the bullet screen and the comment, and the like.

Step 701 and step 702 are a process of enabling, by the user, the custom lock screen by selecting a display style. The user defines a display style, so that a personalized custom lock screen can be generated according to a user requirement. It is easily understood that the target display style can help improve personalization and diversity of a lock screen, and step 701 and step 702 may alternatively be omitted. For example, in some embodiments, the target display style may alternatively not be determined, and a custom lock screen is generated based only on first data and second data in the following descriptions. Alternatively, in some other embodiments, the target image and the target text are generated based on first data, second data, and a default display style. For example, after the user enables the custom lock screen function, if no display style is selected, it is determined that a display style corresponding to the user is the default display style. For another example, the terminal may enable the custom lock screen function by default, and use the default display style to generate the target image and the target text by default.

In addition to the method in step 701 and step 702, the target display style may alternatively be determined in another manner. For example, the target display style may alternatively be a display style, among preset display styles, that is determined by the terminal based on multimedia content browsed by the user and that best matches the user, and the target display style is sent to the server through step 702. Alternatively, the target display style may be a display style, among preset display styles, that is determined by the server based on multimedia content browsed by the user and that best matches the user. That is, the target display style is a display style, among the preset display styles, that is determined based on the multimedia content browsed by the user and that best matches the user. Herein, the target display style may be determined by the terminal or the server.

A specific determining method may be: inputting a name of multimedia data browsed by the user to a classification model, and determining, through the classification model, a display style that best matches the user; or may be: clustering feature vectors of videos browsed by the user, and determining a display style that best matches a feature vector of a cluster center as the target display style. The foregoing two specific implementation methods are merely examples, and do not constitute a limitation on this application.

After performing step 701 and step 702 or another step of determining the target display style, the server may determine that the terminal has enabled the custom lock screen function, and the target image and the target text need to be provided for the terminal. In this case, step 703 to step 705 may be performed, to generate the target image and the target text, and send the target image and the target text to the terminal.

It should be noted that, in some embodiments, steps 701 and 702 may be performed only once, and subsequent steps 703 to 706 may be performed for a plurality of times. To be specific, the user may enable the custom lock screen function only once, and the server may generate a plurality of target images and/or a plurality of pieces of target text that comply with the target display style. In addition, each time the user starts a lock screen application, different target images and target text may be displayed, to improve diversity of a lock screen interface. In some other embodiments, steps 701 to 706 may be performed sequentially, and each step is performed only once. In some other embodiments, steps 701 and 702 may alternatively be performed for a plurality of times. After step 701 and step 702 are performed for a plurality of times, step 703 to step 706 are further performed. In this way, the user can set a plurality of different target display styles by performing steps 701 and 702 for a plurality of times. When step 703 to step 706 are subsequently performed for a plurality of times, target images and target text of the plurality of display styles may be generated, to improve diversity of the lock screen interface.

Step 703: The server obtains first data and second data of the terminal.

Step 704: The server generates a target image and target text based on the first data and the second data.

The target image is related to at least the first data, and the target text is related to at least the second data. The first data indicates multimedia content browsed by a user corresponding to the terminal by using a multimedia application. The first data includes at least one of the following data: metadata of the multimedia content, and media data of the multimedia content. The media data includes at least one of the following data of the multimedia content: text, audio, a video, and an image. The second data indicates usage data generated when the user browses the multimedia content by using the multimedia application. A specific meaning of the usage data is described in the foregoing descriptions. Details are not described herein again.

That is, the generated target image is related to the multimedia content browsed by the user, and the generated target text is related to the usage data of the user. For specific descriptions of the target image and the target text, refer to the foregoing descriptions. Details are not described herein again. In some embodiments, the generated target image and target text may alternatively be related to the target display style in step 701 and step 702. Herein, step 703 and step 704 are described in detail by using an example in which target text and a target image corresponding to the target display style are generated through artificial intelligence generated content (AI generated content, AIGC) in a lock screen scenario.

Specifically, step 704 may include: obtaining the first data and the second data; and generating the target image and the target text through a target model by using the first data, the second data, and the target display style as inputs, where the target model has a function of generating a corresponding image and corresponding text based on input multimedia content that is browsed by the user and an input display style.

As described above, the terminal sends the usage data of the user to the server, and the server may store the usage data of the user after receiving the usage data. In addition, the server usually further stores multimedia data of the multimedia application. For example, the server may store a multimedia database of the multimedia application. Obtaining the first data and the second data herein may be: obtaining the second data from the usage data of the user that is stored on the server, determining an identifier of the multimedia content browsed by the user, and obtaining, from the multimedia database of the multimedia application that is stored on the server, the first data that matches the determined identifier of the multimedia content.

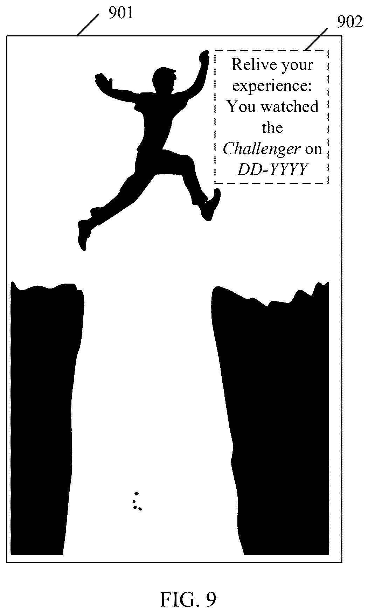

The target model may be specifically a model in which the first data, the second data, and the target display style are input, and the target image including the target text is output. To be specific, an output image includes text, and text content does not block a subject part of the image. For example, as shown in FIG. 9, the target image including the target text is 901, the target text is 902, a subject part of the image is a "person", and the target text does not block the "person".

In addition, a font and a color of the text may also be consistent with a display style of the target image or an overall display effect of the image. For example, if a red color occupies a largest area in the subject part of the image, the color of the text may also be red. For another example, if the target image is in a Chinese traditional style, the font of the text may be cursive script, regular script, or the like.

Specifically, the target model may further include two models: an image generation model and a text generation model. In this case, step 704 specifically includes: generating the target image through the image generation model by using the first data and the target display style as inputs; and generating the target text through the text generation model by using the second data as an input.

The image generation model herein may be specifically a generative adversarial network (generative adversarial network, GAN), a diffusion model (diffusion model, DM), or the like. The text generation model may be a generative pre-trained transformer (generative pre-trained transformer, GPT) network or another similar model.

In this embodiment of this application, the target image and the target text may be directly generated through the image generation model and the text generation model that have been pre-trained. In addition, in this embodiment of this application, for the image generation model that has been pre-trained, in the scenario in this embodiment of this application, sample data marked with a display style may be obtained, and the image generation model is further trained by using the sample data. In this way, the image generation model can better learn features of different display styles, so that a target image better complying with the target display style can be generated based on the target display style in step 704.

In addition, before the target image and the target text are generated through the target model, the method may further include: extracting a feature vector corresponding to the first data (including the metadata and the media data) of the multimedia content, and using the feature vector as an input for the image generation model or for the image generation model and the text generation model. Two descriptors may be further generated, and the two descriptors are used to inform the model of a requirement for output content. In this way, the model can better generate, based on an input, a target image and target text that meet the requirement.

In other words, when the first data includes at least the metadata, before step 704, the method further includes: obtaining the feature vector of the first data; and generating the first descriptor based on the metadata and the target display style, and generating the second descriptor based on the second data, where the first descriptor describes a feature of an image that needs to be generated, and the second descriptor describes a feature of text that needs to be generated.

In the foregoing case, step 704 includes: generating the target image through the image generation model by using the feature vector of the first data and the first descriptor as inputs; and outputting the target text through the text generation model by using the second descriptor as an input.

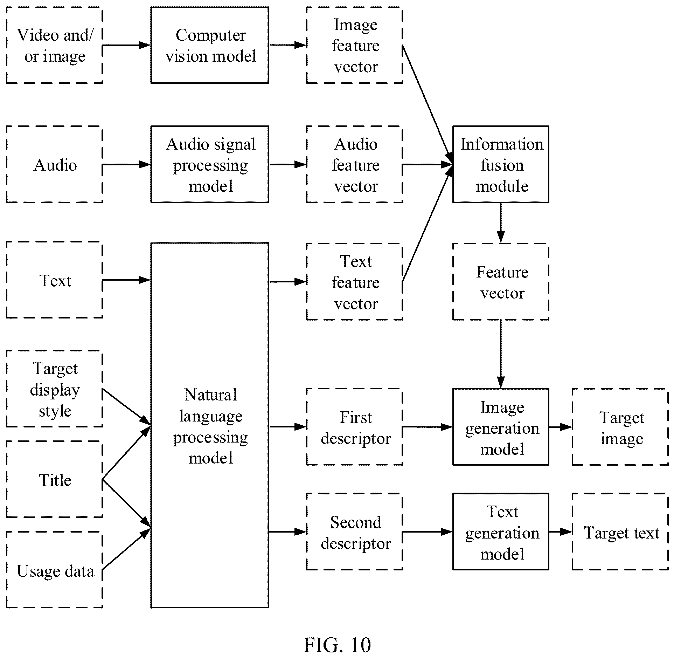

For details about the foregoing generation process, refer to FIG. 10. The following describes the foregoing generation process in detail with reference to FIG. 10 by using an example in which the multimedia application is a video application and the multimedia content browsed by the user is a movie: *Challenger.* In FIG. 10, a solid-line box represents a specific model, and a dashed-line box represents input or output data.

For the *Challenger,* the metadata may include basic information of the movie, for example, may include a title, a director, and a screenwriter; and the media data is specific content of the movie, for example, may include a poster of the movie, a promotion video, a plot introduction, a complete video of the movie, complete audio, and complete subtitles.

First, the feature vector of the first data may be obtained. The obtained feature vector may include any one or more of the following: an image feature vector, an audio feature vector, and a text feature vector. Feature vectors corresponding to different types of data may be extracted by using different models. An example of obtaining an image feature vector, an audio feature vector, and a text feature vector of the *Challenger* is used below to specifically describe a process of obtaining a feature vector based on three steps: 1, 2, and 3.
1. Input video data and/or image data of the *Challenger* to a computer vision model, to extract the image feature vector of the movie.
   The computer vision model may be specifically a contrastive language-image pre-training (contrastive language-image pre-training, CLIP) model. A video of the *Challenger* may be the complete video of the movie and/or the promotion video of the movie. An image of the *Challenger* may include a poster image and/or a movie video screenshot. The movie video screenshot may be a movie video screenshot that is officially released for promotion, or may be a bullet screen or a video frame played many times. When the usage data of the user includes data of a bullet screen published by the user, the movie video screenshot may alternatively be a screenshot corresponding to a video progress at which the user publishes the bullet screen, or the like.
2. Input the complete audio of the *Challenger* to an audio signal processing model, to obtain the audio feature vector of the movie.
3. Input text data of the *Challenger* to a natural language processing model, to obtain the text feature vector of the movie.

The text data herein may include the name, the director, the screenwriter, the plot introduction, the complete subtitles, and the like of the *Challenger.* In a possible implementation, the text input to the natural language processing model may include text in media data of the *Challenger.* In another possible implementation, the text input to the natural language processing model may further include metadata of the *Challenger.* In still another possible implementation, the text input to the natural language processing model may include at least one of the following: metadata of the *Challenger,* and text in media data.

The computer vision model in 1, the audio signal processing model in 2, and the natural language processing model in 3 constitute the image-text-speech tri-tower model mentioned in FIG. 3.

Any one or more of the foregoing three steps may be omitted. Specifically, for different types of multimedia content, for a feature of the multimedia content, one or more of the foregoing three steps may be selectively performed to extract a feature vector. For example, in this embodiment, a target image and target text are generated based on the multimedia content *Challenger.* In a video application scenario, image and video data in the scenario is abundant, and the server may generate a target image based only on an image frame in a video or the like. Therefore, in this embodiment, steps 2 and 3 may alternatively be omitted.

4. Generate a first descriptor based on first data and a target display style, and generate a second descriptor based on second data.

A specific method for generating a descriptor may be: generating the descriptor by using the natural language processing model. For example, in this embodiment, the metadata/media data of the *Challenger,* the target display style, and usage data of the user for the *Challenger* may be input to the natural language processing model, and the first descriptor and the second descriptor are output.

Specifically, the first descriptor is used to control generation of a target image, and is generated based on the target display style and the metadata/media data of the *Challenger.* An example in which the first descriptor is generated based on the target display style and the title of the *Challenger* is used below for description. When the target display style is the "Minimalist" style, the first descriptor may be "Generate a minimalist-style image of the *Challenger".* The target display style and the title of the *Challenger* are descriptions of the target image, and the first descriptor is a descriptor that describes a feature of the target image that needs to be generated. In this case, the image generation model may generate, based on the first descriptor, an image that corresponds to the target display style and that is related to the *Challenger.*

In addition to generating the first descriptor based on the target display style and a title of multimedia content, a descriptor may alternatively be generated based on other data. For example, the descriptor may alternatively be generated based on the target display style, the title of the multimedia content, and an introduction of the multimedia content, and the following may be generated: "Generate a minimalist-style image of the *Challenger* to describe a person challenging a limit". The foregoing examples are merely intended for ease of understanding, and do not constitute a limitation on this embodiment of this application.

The second descriptor is used to control generation of target text, and the second descriptor is generated based on at least the usage data of the user for the *Challenger.* The usage data of the user may include an identifier of content browsed by the user and a description of specific usage behavior. For example, the usage data of the user may include time at which the user watched the *Challenger,* or progress of watching the *Challenger.* For example, the second descriptor may be specifically: "Generate a screen lock description to remind the user that the user watched the movie in the image on *MM-DD".*

In addition to the description of the specific usage behavior, the second descriptor may further include a title of multimedia content browsed by the user. To be specific, herein, the specific usage behavior of the user and the title of the multimedia content browsed by the user may be determined based on the usage data of the user, and the second descriptor is generated based on the specific usage behavior of the user and the title of the multimedia content browsed by the user. For example, the second descriptor may be: "Generate a screen lock description to remind the user that the user watched the *Challenger* on *MM-DD".*

In addition, for the natural language processing model, in a training stage, some samples including descriptors may be further obtained for the natural language processing model that has been pre-trained. In the use scenario in this embodiment of this application, the natural language processing model is further trained, so that the natural language processing model can generate a descriptor that meets a requirement in this embodiment of this application.

In the foregoing examples, the first descriptor and the second descriptor are generated by using the natural language processing model. In this way, diversity of a generated descriptor can be improved. It is easily understood that the first descriptor and the second descriptor may alternatively not be generated based on an artificial intelligence model, for example, may be generated based on a template. For example, a template of the first descriptor may be "Generate an X-style image of Y", where X may be a label of the target display style, for example, "Minimalist", "ACG", or "Chinese traditional", and Y is a title of a video. The second descriptor is similar to the first descriptor. Details are not described herein again.

5. Obtain a unified feature vector.

In some embodiments, at least two of 1, 2, and 3 may be performed. In this case, at least two of the image feature vector, the audio feature vector, and the text feature vector may be output. In this case, the two or three feature vectors output in the foregoing process are input to an information fusion module, and features of different modalities are aligned and fused, to generate a unified feature vector.

6. Input the feature vector and the first descriptor to the image generation model to obtain a target image, and input the second descriptor to the text generation model to obtain target text.

The feature vector input to the image generation model may be the unified feature vector obtained in step 5. When only any one of steps 1, 2, and 3 is performed, the feature vector may be any one of the image feature vector, the audio feature vector, and the text feature vector.

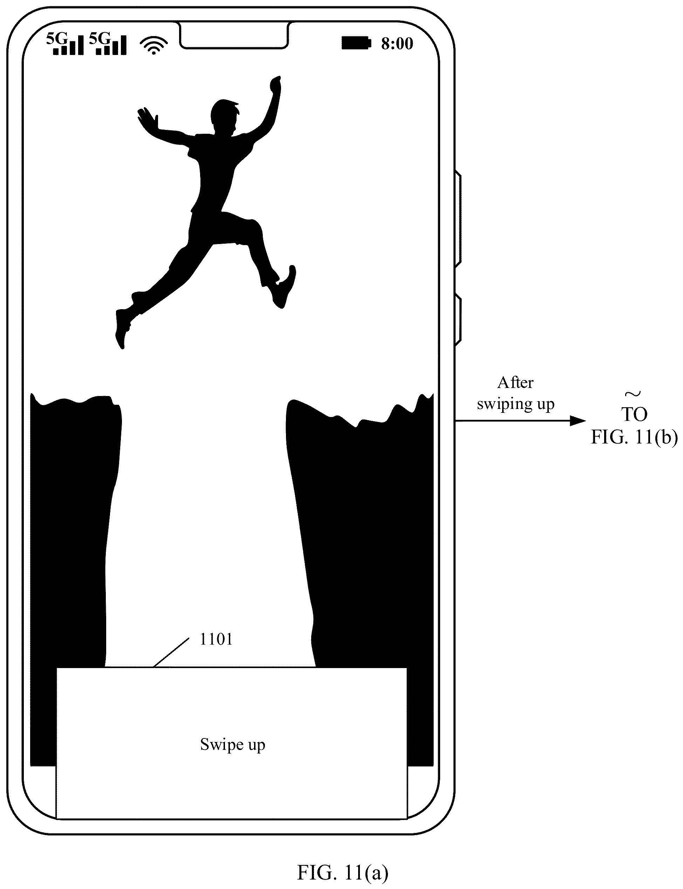

Still in the example in which the target display style is the "Minimalist" style and the multimedia content is the *Challenger,* a minimalist-style image of the *Challenger* in FIG. 11(a) may be output through the foregoing steps. When the usage data is the time at which the user watched the *Challenger,* the following target text may be generated: "Relive your experience: You watched the *Challenger* on *MM-DD".* When the usage data is the progress of watching the *Challenger* by the user, the following target text may be generated: "Continue watching: You have watched 50% of the content of the *Challenger* in the video application". The target text can help improve interpretability of the image shown in FIG. 11(a), so that the user learns of image content and a purpose of pushing the image, to improve use experience of the user. In addition, the target text can enable the user to use the video application more frequently, to increase traffic of the video application.

In the foregoing examples, the video application is used as an example for description. It is easily understood that processing methods for other multimedia applications are similar to the foregoing process, except that media data input in steps 1, 2, and 3 varies.

For example, in a music application, an MV of a song and/or an album cover of the song may be input in step 1, audio content of the song is input in step 2, and lyrics of the song are input in step 3. In a reading application, a cover of a book and/or an illustration in the book are/is input in step 1, and text and/or a brief introduction of the book are/is input in step 3. In a game application, a promotion screenshot and/or a promotion video of a game are/is input in step 1, audio of the promotion video of the game and/or game music are/is input in step 2, and an introduction of the game is input in step 3. The foregoing examples are merely examples, and do not constitute a limitation on this application.

In addition, in the foregoing scenarios, the media data may include four types of data: an image, a video, text, and audio. In some scenarios, the media data may include only one or two of the image, the video, the text, and the audio. For example, in the reading application, a read book may include only text content, and in this case, the media data may include only text data. For another example, in the music application, a song may have only audio and lyrics, and in this case, the media data may include only audio data and text data.

In this case, a process of extracting some feature vectors may be omitted, and a vector to be input to the image generation model also needs to be correspondingly adjusted. For example, in the scenario of the reading application, in a scenario in which the media data includes only text data (to be specific, text of a read book), steps 1, 2, and 5 may alternatively not be performed, and an input for the image generation model is a text feature vector. For example, in the scenario of the music application, when the media data includes text and audio, step 1 may not be performed, and an input for the image generation model is a fusion vector of a text feature vector and an audio feature vector.

In addition, even if the multimedia application includes the four types of data, that is, the image, the video, the text, and the audio, in steps 1, 2, and 3, a feature vector may still be extracted based only on any one, two, or three of the four types of data, and the target image is further generated based on the extracted feature vector.

The foregoing examples are described by using an example of generating the target image of the target display style. If target text corresponding to the target display style needs to be generated, a generation method is similar to the foregoing method. For example, any one or more of steps 1, 2, and 3 may be first performed. In step 4, a second descriptor is generated based on second data and the target display style. The target display style used to generate the second descriptor herein may be the same as the target display style used to generate the first descriptor, or may be different from the target display style used to generate the first descriptor. Then a subsequent step 5 is further performed. In step 6, the feature vector and the second descriptor may be input to the text generation model, to obtain the target text corresponding to the target display style.

Step 705: The server sends the target image and the target text to the terminal.

Correspondingly, the terminal may receive the target image and the target text from the server.

With regard to execution occasions of step 703, step 704, and step 705, step 703 and step 704 may be periodically performed. To be specific, a target image and target text are periodically generated based on historical usage data of the user and data of multimedia content corresponding to the historical usage data. That is, the target image and the target text are generated based on multimedia content previously browsed by the user. In addition, an image library is maintained for each user, and the image library stores at least two target images generated according to the foregoing method, and target text corresponding to the target images. Step 705 may also be periodically performed. To be specific, the server periodically pushes the target image and the target text to the terminal through step 705. Specifically, the server may periodically randomly select an image from the image library, and send the image to the terminal. Execution periodicities of step 704 and step 705 may be different or the same.

In addition, step 703 and step 704 may alternatively be performed when it is detected that new usage data is generated. To be specific, when the user uses a multimedia application, a target image and target text that correspond to multimedia content browsed by the user by using the multimedia application may be generated in real time. For example, the user is watching the *Challenger.* In this case, a target image (as shown in FIG. 9) of the *Challenger* may be generated, and target text used to prompt the user to continue to watch the *Challenger* is generated.

Step 706: The terminal receives a first operation of starting the lock screen application by the user, and displays the target image and the target text in response to the first operation.

To be specific, in a lock screen scenario, the target image and the target text are displayed when the user enters the lock screen interface. For descriptions of the first operation, refer to the foregoing descriptions. Details are not described herein again.

In some embodiments, step 705 may be periodically performed. After the server sends the target image and the target text to the terminal in step 705, the terminal may first cache the received target image and target text on the terminal. When the user starts the lock screen application, a desktop application, a screen-off application, or a system application, the terminal obtains the target image and the target text from cached content for display. When a plurality of target images and a plurality of pieces of target text are cached, a pair of target image and target text may be randomly selected from the cached target images and target text for display.

In some other embodiments, step 705 may alternatively be performed upon triggering by the terminal. For example, that the terminal receives a first operation of starting the lock screen application by the user in step 706 may be first performed; in response to the first operation, step 705 is triggered; and then the target image and the target text are further displayed in step 706.

It should be noted that the foregoing two examples are merely two examples for describing an execution order of step 705 and step 706 in this application, and do not constitute a limitation on this embodiment of this application.

A method for displaying the target image and the target text may be: simultaneously displaying the target image and the target text in response to the first operation; or may be: displaying the target image in the lock screen interface; and receiving a third operation of the user in the lock screen interface, and displaying the target text.

The third operation herein may be a trigger operation for a control in the lock screen interface, for example, may be a tap operation or a swipe-up operation for a control 1101 in FIG. 11(a). Alternatively, the third operation may be a swipe-up operation or the like in the lock screen interface that is different from an operating of unlocking a screen. In this way, the terminal displays the target text only after receiving the third operation, so that the target text can help improve interpretability of the target image without blocking a subject in the target image. The target text can also help improve interaction between the terminal and the user, to improve use experience of the user.

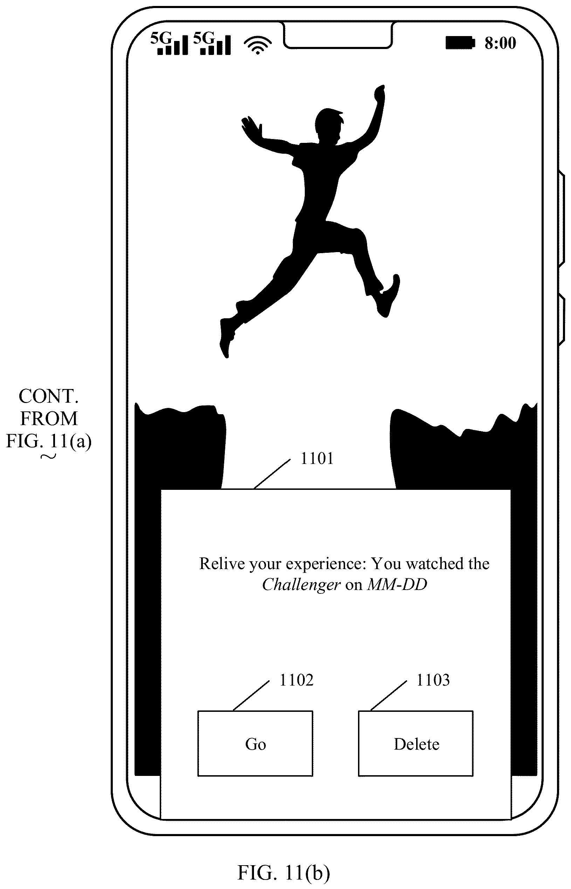

The foregoing process is described in detail by using an example in which the third operation is the swipe-up operation for the control 1101. As shown in FIG. 11(a) and FIG. 11(b), after the user enters the lock screen interface of the lock screen application through the first operation, in response, the terminal may display an interface that includes the target image and that is shown in FIG. 11(a). The user performs the swipe-up operation on the control 1101 in the lock screen interface shown in FIG. 11(a). After receiving the operation, in response, the terminal may display an animation of the control 1101 rising from the bottom of the lock screen interface, and finally display an interface shown in FIG. 11(b). In FIG. 11(b), text included in the control 1101 is the target text.

As shown in FIG. 11(b), in the interface in which the target image and the target text are displayed, in addition to the control 1101, the lock screen interface may further include a control 1102 and a control 1103. The following describes functions of the two controls in detail.

The control 1102 is a Go control, and is also referred to as a second control in this application. In this embodiment of this application, the user may perform a trigger operation on the Go control, to jump from the lock screen interface to an interface of multimedia content corresponding to the image in the lock screen interface.

In addition, when the user has set unlock verification, for example, an unlock password, a user identity needs to be verified before jumping to the interface of the multimedia content. For a method for verifying the user identity, refer to a method in the related technology. Details are not described herein again.

In other words, the method in this embodiment of this application further includes: displaying the second control; receiving a fourth operation of the user on the second control; and in response to the fourth operation, displaying, in a second application, multimedia content corresponding to the target image.

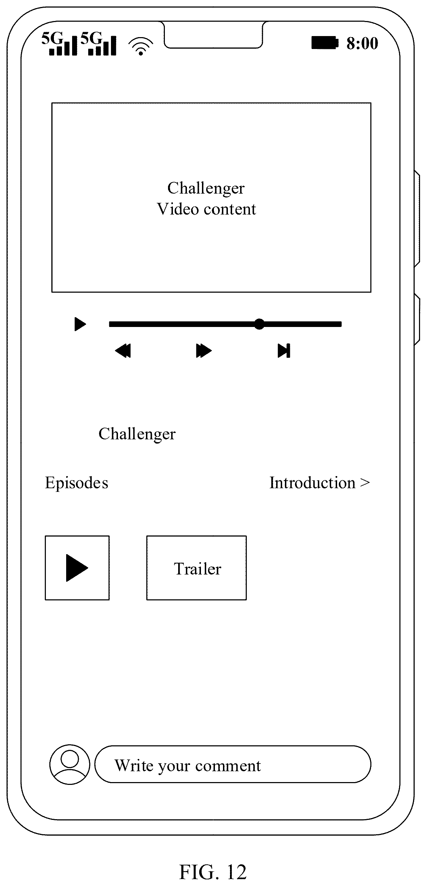

The fourth operation is a trigger operation of the user on the control 1102 shown in FIG. 11(b). For example, the fourth operation may be an operation of tapping the control 1102 by the user. The multimedia content is displayed in the second application. To be specific, the terminal jumps to an interface in which the multimedia content can be browsed, for example, an interface shown in FIG. 12.

The following describes the foregoing process by using an example in which the fourth operation is the operation of tapping the control 1102 by the user. When the image shown in FIG. 11(b) is displayed in the lock screen interface, the terminal may jump to a playback interface of the *Challenger* in FIG. 12 based on the tap operation of the user on the control 1102.

The control 1103 is a Delete control, and is also referred to as a first control in this application. The Delete control is used to stop displaying the current target image and target text after receiving triggering.

Specifically, the method in this embodiment of this application further includes: displaying the first control; receiving a second operation of the user on the first control; and sending first information to the server in response to the second operation.

The first information indicates the server to delete the target image and the target text from an image library corresponding to the user. The image library stores a plurality of images and a plurality of pieces of text that are generated based on the multimedia content browsed by the user and the usage data generated when the user browses the multimedia content.

The second operation may be a trigger operation of the user on the control 1103, for example, may be an operation of tapping the control 1103 by the user. For example, after the terminal displays the content shown in FIG. 11(b), the user may tap the control 1103. After receiving the tap operation of the user on the control 1103, the terminal may generate first information, and send the first information to the server. The server receives the first information from the terminal, and in response to the first information, deletes a corresponding image and corresponding text from the image library. The image library is an image library including a plurality of target images and a plurality of pieces of target text that are generated in step 705.

In the foregoing embodiment, the lock screen application is used as an example for description. In addition, the first application may alternatively be a desktop application, a screen-off application, a system application, or the like. When the first application is another application, an overall implementation method is similar to that of steps 701 to 706. A difference lies in that a specific implementation method of step 706 varies.

Specifically, displaying the target image and the target text in step 706 includes: The first application is the desktop application, and at least the target image and the target text are displayed on a desktop as a desktop wallpaper. Alternatively, the first application is the screen-off application, and the target image and the target text are displayed in a screen-off interface as widgets. For example, the widget 201 shown in FIG. 2 may be replaced with the target image and the target text.

In addition, when the first application is any one of the desktop application, the lock screen application, or the screen-off application, a theme of the terminal may alternatively be generated based on the target image and the target text, and the target text and the target image are displayed in the three applications based on the theme. The theme is a personalized design of a terminal skin interface, and the theme may be designed and developed by an enterprise or an individual developer. Content, in the theme, that may be replaced with the target image and the target text for personalization may specifically include: a wallpaper, an icon, a background in an interface covered by the theme, and the like. The interface covered by the theme may include a notification bar, SMS messages, a dial, contacts, settings, and the like. The wallpaper or the background may be replaced with the target image and the target text. For example, an image shown in FIG. 9 is displayed in the wallpaper or the background of the interface. The icon may be replaced with the target image or theme content in the target image. For example, an application icon on the desktop may be the target image 901 shown in FIG. 9, or an application icon on the desktop may be subject content of the target image, for example, may be the person shown in FIG. 9.

Alternatively, when the first application is the system application, the target image and the target text are displayed in a startup interface of the first application as a startup image. An application usually needs to be loaded during startup. During loading, an icon of the application, an advertisement image, or the like is displayed in a startup interface. In this application, the target image and the target text may alternatively be displayed in a startup interface of the system application. In addition, when a development vendor of a third-party application is in cooperation with a terminal manufacturer or an operating system of the terminal has permission to control a startup interface of the third-party application, the target image and the target text may alternatively be displayed in the third-party application.

In the foregoing embodiments, interaction between the terminal and the server is used as an example to describe in detail the implementation method in embodiments of this application. As described above, embodiments of this application may alternatively be independently performed by the terminal. When the terminal independently performs the foregoing method, a specific implementation method is similar to the foregoing steps 701 to 706. A difference from steps 701 to 706 lies in: When the terminal independently performs the foregoing method, step 702 and step 705 may alternatively not be performed, and step 703 and step 704 are performed by the terminal.

In addition, when the terminal independently performs the foregoing method, in addition to determining the target display style through step 701, the target display style may alternatively be a display style, among preset display styles, that is determined based on multimedia content browsed by the user and that best matches the user.

In addition, when the foregoing delete control exists, after receiving a second operation, in response to the second operation, the terminal may delete the target image and the target text from an image library corresponding to the user, where the image library stores a plurality of images and a plurality of pieces of text that are generated based on the multimedia content browsed by the user and the usage data generated when the user browses the multimedia content. That is, the terminal stores the image library, and the terminal deletes a corresponding image and corresponding text from the image library in response to the second operation.

Some other embodiments of this application further provide an apparatus. The apparatus has a function of implementing the behavior of the electronic device (for example, the terminal or the server) in the foregoing embodiments. The function may be implemented by hardware, or may be implemented by hardware executing corresponding software. The hardware or the software includes one or more modules corresponding to the foregoing function, for example, a processing module, a sending module, and a display module. In an example, the processing module may perform step 701 or step 703, the sending module may perform step 702 or step 705, and the display module may perform step 706.

This application further provides an electronic device, including a memory and a processor. The memory is configured to store a computer program. The processor is configured to execute the computer program, to implement the foregoing method.

This application further provides a server, including a memory and a processor. The memory is configured to store a computer program. The processor is configured to execute the computer program, to implement the foregoing method.

This application further provides a computer-readable storage medium. The computer-readable storage medium stores a computer program. The computer program is used to implement the method.

This application further provides a computer program product, including computer-readable code or a non-volatile computer-readable storage medium carrying computer-readable code. When the computer-readable code is run on an electronic device, a processor in the electronic device performs the foregoing method.

This application further provides a chip. The chip includes a memory and a processor. The memory is configured to store a computer program. The processor is configured to invoke the computer program from the memory, and run the computer program to perform the foregoing method.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An image display method, applied to a terminal, wherein the method comprises:
receiving a first operation of starting a first application by a user; and
displaying a target image and target text in response to the first operation, wherein
the target image is related to at least first data; the first data indicates multimedia content browsed by the user by using a second application; the first data comprises at least one of the following data: metadata of the multimedia content, and media data of the multimedia content; the media data comprises at least one of the following data of the multimedia content: text, audio, a video, and an image; the target text is related to at least second data; and the second data indicates usage data generated when the user browses the multimedia content by using the second application.

2. The method according to claim 1, wherein the target image is further related to a target display style, and/or the target text is further related to the target display style.

3. The method according to claim 2, wherein the target display style is a display style selected by the user from a plurality of displayed alternative display styles; or the target display style is a display style, among preset display styles, that is determined based on the multimedia content browsed by the user and that best matches the user.

4. The method according to any one of claims 1 to 3, wherein the method further comprises:
displaying a second control;
receiving a fourth operation of the user on the second control; and
in response to the fourth operation, displaying, in the second application, multimedia content corresponding to the target image.

5. The method according to any one of claims 2 to 4, wherein the method further comprises: sending the target display style to a server.

6. The method according to any one of claims 1 to 5, wherein before displaying the target image and the target text, the method further comprises:
receiving the target image and the target text from the server.

7. The method according to claim 5 or 6, wherein the method further comprises:
displaying a first control;
receiving a second operation of the user on the first control; and
sending first information to the server in response to the second operation, wherein the first information indicates the server to delete the target image and the target text from an image library corresponding to the user, and the image library stores a plurality of images and a plurality of pieces of text that are generated based on the multimedia content browsed by the user and the usage data generated when the user browses the multimedia content.

8. The method according to any one of claims 2 to 4, wherein the method further comprises:
obtaining the first data and the second data; and
generating the target image and the target text through a target model by using the first data, the second data, and the target display style as inputs, wherein the target model has a function of generating a corresponding image and corresponding text based on input multimedia content that is browsed by the user and an input display style.

9. The method according to claim 8, wherein the target model comprises an image generation model and a text generation model, and generating the target image and the target text through the target model by using the first data, the second data, and the target display style as the inputs comprises:
generating the target image through the image generation model by using the first data and the target display style as inputs; and
generating the target text through the text generation model by using the second data as an input.

10. The method according to claim 9, wherein when the first data comprises at least the metadata, the method further comprises:
obtaining a feature vector of the first data; and
generating a first descriptor based on the metadata and the target display style, and generating a second descriptor based on the second data, wherein the first descriptor describes a feature of an image that needs to be generated, and the second descriptor describes a feature of text that needs to be generated;
generating the target image through the image generation model by using the first data and the target display style as the inputs comprises:
generating the target image through the image generation model by using the feature vector of the first data and the first descriptor as inputs; and
generating the target text through the text generation model by using the second data as the input comprises:
generating the target text through the text generation model by using the second descriptor as an input.

11. The method according to any one of claims 8 to 10, wherein the method further comprises:
displaying a first control;
receiving a second operation of the user on the first control; and
in response to the second operation, deleting the target image and the target text from an image library corresponding to the user, wherein the image library stores a plurality of images and a plurality of pieces of text that are generated based on the multimedia content browsed by the user and the usage data generated when the user browses the multimedia content.

12. The method according to any one of claims 1 to 11, wherein the first application is a lock screen application, and displaying the target image and the target text comprises:
displaying the target image in a lock screen interface; and
receiving a third operation of the user in the lock screen interface, and displaying the target text.

13. The method according to any one of claims 1 to 11, wherein displaying the target image and the target text comprises:
when the first application is a desktop application, displaying the target image and the target text on a desktop as a desktop wallpaper; or
when the first application is a screen-off application, displaying the target image and the target text in a screen-off interface as widgets; or
when the first application is a system application, displaying the target image and the target text are displayed in a startup interface of the first application as a startup image.

14. An image generation method, applied to a server, wherein the method comprises:
obtaining first data and second data of a terminal, wherein the first data indicates multimedia content browsed by a user corresponding to the terminal by using a second application; the first data comprises at least one of the following data: metadata of the multimedia content, and media data of the multimedia content; the media data comprises at least one of the following data of the multimedia content: text, audio, a video, and an image; and the second data indicates usage data generated when the user browses the multimedia content by using the second application;
generating a target image and target text based on the first data and the second data, wherein the target image is related to at least the first data, and the target text is related to at least the second data; and
sending the target image and the target text to the terminal.

15. The method according to claim 14, wherein the target image is further related to a target display style, and/or the target text is further related to the target display style.

16. The method according to claim 15, wherein the method further comprises:
receiving the target display style sent by the terminal, wherein the target display style is a display style selected by the user from a plurality of alternative display styles displayed on the terminal.

17. The method according to claim 15, wherein the target display style is a display style, among preset display styles, that is determined based on the multimedia content browsed by the user and that best matches the user.

18. The method according to any one of claims 15 to 17, wherein generating the target image and the target text based on the first data and the second data comprises:
generating the target image and the target text through a target model by using the first data, the second data, and the target display style as inputs, wherein the target model has a function of generating a corresponding image and corresponding text based on input multimedia content that is browsed by the user and an input display style.

19. The method according to claim 18, wherein the target model comprises an image generation model and a text generation model, and generating the target image and the target text through the target model by using the first data, the second data, and the target display style as the inputs comprises:
generating the target image through the image generation model by using the first data and the target display style as inputs; and
generating the target text through the text generation model by using the second data as an input.

20. The method according to claim 19, wherein when the first data comprises at least the metadata, the method further comprises:
obtaining a feature vector of the first data; and
generating a first descriptor based on the metadata and the target display style, and generating a second descriptor based on the second data, wherein the first descriptor describes a feature of an image that needs to be generated, and the second descriptor describes a feature of text that needs to be generated;
generating the target image through the image generation model by using the first data and the target display style as the inputs comprises:
generating the target image through the image generation model by using the feature vector of the first data and the first descriptor as inputs; and
generating the target text through the text generation model by using the second data as the input comprises:
generating the target text through the text generation model by using the second descriptor as an input.

21. The method according to any one of claims 14 to 20, wherein the method further comprises:
receiving first information from the terminal; and
in response to the first information, deleting the target image and the target text from an image library corresponding to the user, wherein the image library stores a plurality of images and a plurality of pieces of text that are generated based on the multimedia content browsed by the user and the usage data generated when the user browses the multimedia content.

22. An electronic device, comprising a memory and a processor, wherein the memory is configured to store a computer program, and the processor is configured to run the computer program to implement the method according to any one of claims 1 to 13.

23. A server, comprising: a memory, configured to store instructions to be executed by one or more processors of the server; and a processor, wherein when the processor executes the instructions in the memory, the server is enabled to perform the method according to any one of claims 14 to 21.

24. A computer-readable storage medium, wherein the computer-readable storage medium stores a computer program, and the computer program is used to implement the method according to any one of claims 1 to 21.

25. A chip, wherein the chip comprises a memory and a processor, the memory is configured to store a computer program, and the processor is configured to invoke the computer program from the memory and run the computer program, to perform the method according to any one of claims 1 to 21.
